# EUROPEAN PATENT APPLICATION

(11) **EP 4 250 137 A1**
(43) Date of publication of application: **27.09.2023**
(21) Application number: 21897226.3
(22) Date of filing: 30.11.2021
(51) Int. Cl.: G06F 16/9032

(54) **INFORMATION SORTING METHOD, AND ELECTRONIC DEVICE**

(30) Priority: 30.11.2020 CN 202011375972
(71) Applicant: Huawei Technologies Co., Ltd., Shenzhen, Guangdong 518129 (CN)
(72) Inventor: FANG, Rongjie, Shenzhen, Guangdong 518129 (CN)
(74) Representative: Huawei European IPR
(86) International application number: PCT/CN2021/134377
(87) International publication number: WO 2022/111726

(57) **Abstract**

This application provides an information ranking method and an electronic device, and relates to the field of terminal artificial intelligence. The method includes: An electronic device first performs search based on a keyword in a search request of a user, to obtain labels of N candidate objects, where the candidate objects may be candidate applications and/or candidate services; and then calculates semantic similarities between the keyword and the labels of the N candidate objects, and determines, from the labels of the N candidate objects, labels of M candidate objects corresponding to semantic similarities greater than a specified threshold. Labels of K candidate objects in the labels of the M candidate objects correspond to target objects of a same attribute that are installed on K devices. Therefore, the electronic device may rank the K candidate objects based on semantic similarities between the keyword and the labels of the K candidate objects and device statuses of the K devices, and display a recommendation interface including a ranking result. This helps improve search efficiency, and improve user experience.

## Description

### CROSS-REFERENCE TO RELATED APPLICATIONS

This application claims priority to Chinese Patent Application No. 202011375972.0, filed with the China National Intellectual Property Administration on November 30, 2020 and entitled "INFORMATION RANKING METHOD AND ELECTRONIC DEVICE", which is incorporated herein by reference in its entirety.

### TECHNICAL FIELD

This application relates to the field of terminal technologies, and in particular, to an information ranking method and an electronic device.

### BACKGROUND

With development of intelligent terminals, it is increasingly popular for a user to have a plurality of terminals. For example, the user may have three terminals at the same time: a smartphone, a tablet computer, and a smartwatch, and the three terminals may respectively support different functions. Currently, a Harmony (Harmony) operating system (operating system, OS) is a "future-oriented" and all-scenario (mobile office, sports and health, social communication, media entertainment, and the like) oriented distributed operating system. Based on a conventional single-device system capability, the Harmony OS proposes a distributed concept that is based on a same set of system capabilities and that adapts to a plurality of terminal forms, and can support a plurality of electronic devices.

An application layer in the Harmony OS may include an application and a service. The service refers to a feature ability (feature ability, FA) service and a particle ability (particle ability, PA) service. The application includes one or more FA services and/or PA services. The FA service has a UI interface, and provides a capability to interact with a user. The PA service does not have a UI interface, and provides a capability of task running on background and unified data access abstraction. An application developed based on the FA/PA can implement a particular service function, and support cross-device scheduling and distribution, to provide consistent and efficient application experience for a user. An application based on an FAJPA service features a small data volume and being available without downloading and installation, achieving a dream of "near at hand", and therefore has a very broad use prospect. Based on the feature of the Harmony OS, related application labels or service labels on a plurality of devices can be obtained by searching on one device. If search results are still ranked in a conventional semantic analysis manner, a user may fail to timely and accurately find a desired application or a desired service because there are too many applications or services, which affects user experience.

### SUMMARY

This application provides an information ranking method and an electronic device, to resolve a problem that a user fails to timely and accurately find a desired application or a desired service because there are too many applications or services.

According to a first aspect, an embodiment of this application provides an information ranking method. The method may be applied to an electronic device, and the method includes: The electronic device receives a search operation of a user, where the search operation includes a keyword entered by the user; and displays a recommendation interface in response to the search operation, where labels of K candidate objects in candidate objects in the recommendation interface correspond to target objects of a same attribute that are installed on K devices. Ranking of the K candidate objects is determined based on semantic similarities between the keyword and the labels of the K candidate objects and device statuses of the K devices.

In this embodiment of this application, compared with a conventional technology, in the method, a plurality of candidate objects can be found from the electronic device and another device connected to the electronic device, and an application or a service on a more related device in the plurality of candidate objects can be ranked higher, making it convenient for the user to search. This can improve search efficiency, and improve user experience.

In a possible design, before the recommendation interface is displayed, the K candidate objects may be ranked in the following manner. Specifically, the electronic device may obtain labels of N candidate objects based on the keyword, and calculate semantic similarities between the keyword and the labels of the N candidate objects; and then determine, from the labels of the N candidate objects, labels of M candidate objects corresponding to semantic similarities greater than a specified threshold. The labels of the K candidate objects in the labels of the M candidate objects correspond to the target objects of the same attribute that are installed on the K devices, M≤N, and M and N are positive integers greater than or equal to 2. Therefore, the K candidate objects may be ranked based on the semantic similarities between the keyword and the labels of the K candidate objects and the device statuses of the K devices.

In this embodiment of this application, compared with a conventional technology in which a search result is usually obtained from a device locally or a network side, in this application, a candidate object may be found from the electronic device and another device connected to the electronic device. In addition, the method is more specific to ranking of candidate objects that are in search results and that correspond to target objects of a same attribute. In a ranking process, device statuses are also used, so that an application or a service of a more related device is ranked higher, making it convenient to search. This can improve search efficiency, and improve user experience.

In a possible design, the device statuses of the K devices may include at least one of the following states: a power supply type of the device, a screen size of the device, an available computing resource of the device, and a correlation between device performance and the target object. For example, some speaker is a device of a power-plugged type. A smart television is a device of the power-plugged type, and is a large-screen device. Audio playing performance of the speaker is strongly related to a music-type application, and is weakly related to a video-type application.

In this embodiment of this application, an association relationship between a device status and a target object is considered, so that an application or a service on a more related device can be ranked higher, making it convenient to search. This can improve search efficiency, and improve user experience.

In a possible design, the target objects of the same attribute on the K devices may be target objects with a same name on the K devices, for example, WeChat^{®} applications on a mobile phone and a tablet. Alternatively, the target objects of the same attribute on the K devices are target objects from a same vendor on the K devices. For example, a TikTok^{®} application on a mobile phone and a Douyin^{®} application on a tablet may be applications from a same vendor ByteDance^{®}. Alternatively, the target objects of the same attribute on the K devices may be target objects with a same installation package on the K devices. For example, names of installation packages of WeChat^{®} applications on a mobile phone and a tablet are the same. Alternatively, the target objects of the same attribute on the K devices may be target objects with a same function on the K devices. For example, both a TikTok^{®} application on a mobile phone and a Douyin^{®} application on a tablet have a short video sharing function.

In a possible design, that the electronic device ranks the K candidate objects based on the semantic similarities between the keyword and the labels of the K candidate objects and the device statuses of the K devices includes: The electronic device determines, based on the semantic similarities between the keyword and the labels of the K candidate objects, first weights respectively corresponding to the K candidate objects; determines, based on matching degrees between a priori knowledge constraint condition related to the target object and the device statuses of the K devices, second weights respectively corresponding to the K candidate objects; and then ranks the K candidate objects based on the first weights and the second weights. For example, in a possible implementation, the K candidate objects may be ranked based on products of the first weights and the second weights.

In this embodiment of this application, the electronic device determines, based on the semantic similarities between the keyword and the labels of the K candidate objects, the first weights respectively corresponding to the K candidate objects; and determines, based on the matching degrees between the priori knowledge constraint condition related to the target object and the device statuses of the K devices, the second weights respectively corresponding to the K candidate objects. In this way, the K candidate objects can be comprehensively ranked based on the first weights and the second weights. A result of such ranking can more accurately match an application or a service that the user wants to search for. This helps improve search efficiency, and improve user experience.

In a possible design, the priori knowledge constraint condition related to the target object may include at least one of the following conditions: the target object preferentially runs on a large-screen device, the target object preferentially runs on a device of a power-plugged type, the target object preferentially runs on a device with a strong computing capability, and the target object preferentially runs on a device with good audio playing performance. For example, a video-type FA service or a video-type application preferentially runs on a large-screen device, a television-type FA service or a television-type application preferentially runs on a power-plugged device, and a music-type FA service or a music-type application preferentially runs on a speaker.

In this embodiment of this application, the priori knowledge constraint condition may be manually preset. An association relationship between an application or a service and a device status may be established by using the condition, to help rank applications or services by using device statuses.

In a possible design, the electronic device may determine the second weights in any one of the following manners:
when the priori knowledge constraint condition related to the target object is that the target object preferentially runs on a device of a power-plugged type, determining that a second weight of a corresponding candidate object on a device that supports the power-plugged type is greater than a second weight of a corresponding candidate object on a device that does not support the power-plugged type in the K devices corresponding to the K candidate objects; or
when the priori knowledge constraint condition related to the target object is that the target object preferentially runs on a large-screen device, determining that a corresponding candidate object on a device with a larger screen has a larger second weight in the K devices corresponding to the K candidate objects; or
when the priori knowledge constraint condition related to the target object is that the target object preferentially runs on a device with a strong computing capability, determining that a corresponding candidate object on a device having a stronger computing capability has a larger second weight in the K devices corresponding to the K candidate objects; or
when the priori knowledge constraint condition related to the target object is that the target object preferentially runs on a device with good audio playing performance, determining that a device with better audio playing performance has a larger second weight in the K devices corresponding to the K candidate objects.

In a possible design, a manner of ranking the K candidate objects displayed by the electronic device in the preset recommendation interface complies as follows: a candidate object with a larger product of the first weight and the second weight is ranked higher; on the contrary, a candidate object with a smaller product of the first weight and the second weight is ranked lower.

In this embodiment of this application, a result of ranking recommended applications or services based on the foregoing method more accurately matches an application or a service that the user wants to search for. This helps improve search efficiency, and improve user experience.

In a possible design, that the electronic device obtains labels of N candidate objects based on the keyword includes: obtaining, from a database, detailed information about L candidate objects on the K devices; extracting original keywords from the detailed information about the L candidate objects, performing semantic parsing on the original keywords, and obtaining labels of the L candidate objects from a parsing result; and obtaining the labels of the N candidate objects from the labels of the L candidate objects based on matching degrees between the keyword and the labels of the L candidate objects. Detailed information about an application includes but is not limited to information such as a title of the application, a description text of the application, comment information about the application, a recommendation of the application, and a latest update feature of the application. A label of the application includes but is not limited to information such as a name of the application, a category to which the application belongs, and a feature of the application. Detailed information about a service includes but is not limited to information such as a title of the service, a description text of the service, comment information about the service, a recommendation of the service, and a latest update feature of the service. A label of the service includes but is not limited to information such as a name of the service, a category to which the service belongs, and a feature of the service.

According to a second aspect, an embodiment of this application provides an electronic device, including one or more processors and a memory. The memory stores program instructions, and when the program instructions are executed by the device, the method according to any one of the foregoing aspects and the possible designs of the foregoing aspects in embodiments of this application is implemented.

According to a third aspect, an embodiment of this application provides a chip. The chip is coupled to a memory in a device, so that when the chip runs, the chip invokes program instructions stored in the memory, to implement the method according to any one of the foregoing aspects and the possible designs of the foregoing aspects in embodiments of this application.

According to a fourth aspect, an embodiment of this application provides a computer-readable storage medium. The computer-readable storage medium stores program instructions, and when the program instructions are run on an electronic device, the device is enabled to perform the method according to any one of the foregoing aspects and the possible designs of the foregoing aspects in embodiments of this application.

According to a fifth aspect, an embodiment of this application provides a computer program product. When the computer program product runs on an electronic device, the electronic device is enabled to implement the method according to any one of the foregoing aspects and the possible designs of the foregoing aspects in embodiments of this application.

In addition, for technical effects brought by any possible design manner in the second aspect to the fifth aspect, refer to technical effects brought by different design manners in related description of the method part. Details are not described herein again.

### BRIEF DESCRIPTION OF DRAWINGS

FIG. 1 is a schematic diagram of a structure of a mobile phone according to an embodiment of this application;
FIG. 2 is a schematic diagram of a structure of an Android operating system according to an embodiment of this application;
FIG. 3 is a schematic diagram of an application scenario according to an embodiment of this application;
FIG. 4A-1 to FIG. 4E are schematic diagrams of another group of interfaces according to an embodiment of this application;
FIG. 5A is a schematic diagram of another application scenario according to an embodiment of this application;
FIG. 5B is a schematic diagram of another group of interfaces according to an embodiment of this application;
FIG. 6A and FIG. 6B are schematic diagrams of interfaces according to an embodiment of this application;
FIG. 7 is a schematic flowchart of another information ranking method according to an embodiment of this application;
FIG. 8 is a schematic flowchart of another information ranking method according to an embodiment of this application;
FIG. 9 is a schematic flowchart of another information ranking method according to an embodiment of this application;
FIG. 10 is a schematic flowchart of another information ranking method according to an embodiment of this application; and
FIG. 11 is a schematic diagram of a structure of an electronic device according to an embodiment of this application.

### DESCRIPTION OF EMBODIMENTS

To make objectives, technical solutions, and advantages of embodiments of this application clearer, the following describes the technical solutions in the embodiments of this application in detail with reference to accompanying drawings of the specification and specific implementations.

Currently, an electronic device may perform semantic matching by using a keyword entered by a user, to obtain search results of related applications, and perform ranking based on semantic similarities. However, as limited by an Android operating system installed on the electronic device, the search results do not include application information on another device. Therefore, only application information that is on the electronic device and that is related to the entered keyword is displayed in a search result interface of the electronic device. It can be learned that currently, the application search manner of the electronic device does not include searching and ranking of application information or service information on a plurality of devices.

In a Harmony (Harmony) operating system (operating system, OS), if search results are still ranked in a conventional semantic analysis manner, a user may fail to timely and accurately find a desired application or service because there are too many applications or services, which affects user experience. Based on this, embodiments of this application provide an information ranking method and an electronic device. According to the method, applications and/or services in search results of a device and another device connected to the device can be accurately ranked, so that information search efficiency can be effectively improved, making it convenient for a user to timely and accurately find a desired application or service.

The information ranking method provided in embodiments of this application may be applied to an electronic device. In some embodiments, the electronic device may be a portable terminal that includes functions such as a personal digital assistant and/or a music player, such as a mobile phone, a tablet computer, a wearable device (for example, a smartwatch) with a wireless communications function, or an in-vehicle device. An example embodiment of the portable terminal includes but is not limited to a portable terminal with Harmony OS^{®}, iOS^{®}, Android^{®}, Microsoft^{®}, or another operating system. Alternatively, the portable terminal may be, for example, a laptop computer (Laptop) with a touch-sensitive surface (for example, a touch panel). It should be further understood that in some other embodiments, the terminal may alternatively be a desktop computer with a touch-sensitive surface (for example, a touch panel).

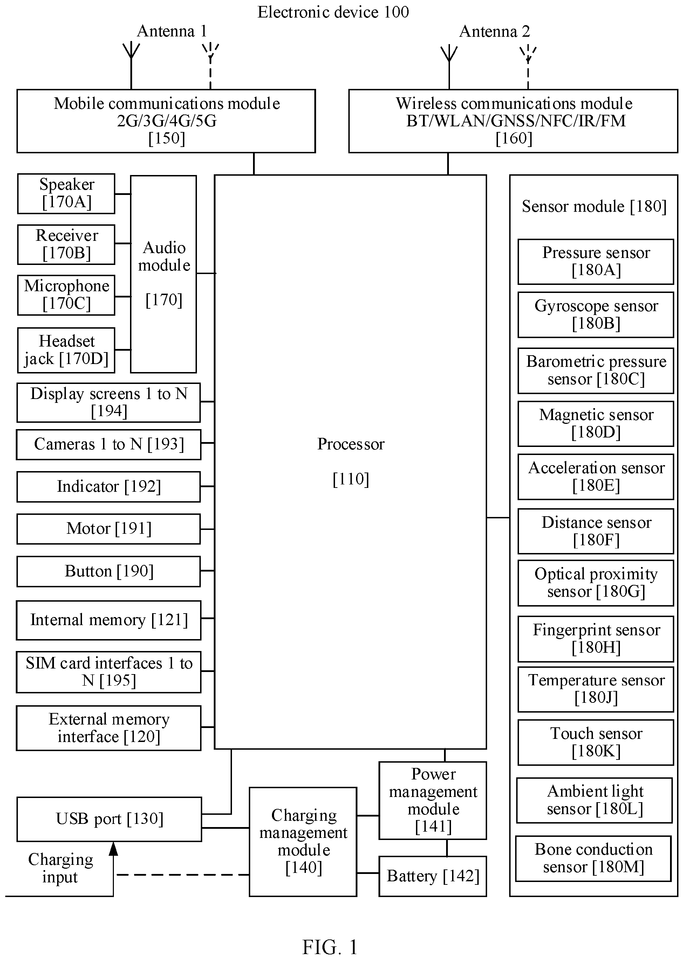

FIG. 1 is a schematic diagram of a structure of an electronic device 100.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the schematic structure in this embodiment of this application does not constitute a specific limitation on the electronic device 100. In some other embodiments of this application, the electronic device 100 may include more or fewer components than those shown in the figure, or have some components combined, or have some components split, or have a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The electronic device 100 implements a display function by using the GPU, the display screen 194, the application processor, and the like. The GPU is a microprocessor for image processing, and is connected to the display screen 194 and the application processor. The GPU is configured to perform mathematical and geometric calculation for graphics rendering. The processor 110 may include one or more GPUs that execute a program instruction to generate or change display information.

The electronic device 100 may implement a photographing function by using the ISP, the camera 193, the video codec, the GPU, the display screen 194, the application processor, and the like.

The SIM card interface 195 is configured to connect to a SIM card. The SIM card may be attached to and detached from the electronic device 100 by being inserted into the SIM card interface 195 or removed from the SIM card interface 195. The electronic device 100 may support one or N SIM card interfaces. N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 may be compatible with different types of SIM cards. The SIM card interface 195 may also be compatible with an external memory card. The electronic device 100 interacts with a network by using a SIM card, to implement call, data communication, and other functions. In some embodiments, the electronic device 100 uses an eSIM, that is, an embedded SIM card.

A wireless communications function of the electronic device 100 may be implemented by using the antenna 1, the antenna 2, the mobile communications module 150, the wireless communications module 160, the modem processor, the baseband processor, and the like. The antenna 1 and the antenna 2 are configured to transmit and receive electromagnetic wave signals. Each antenna in the electronic device 100 may be configured to cover one or more communications bands. Different antennas may be multiplexed to improve antenna utilization. For example, the antenna 1 may be multiplexed as a diversity antenna of a wireless local area network. In some other embodiments, the antenna may be used in combination with a tuning switch.

The mobile communications module 150 may provide a wireless communications solution that is applied to the electronic device 100 and that includes 2G/3G/4G/5G. The mobile communications module 150 may include at least one filter, a switch, a power amplifier, a low noise amplifier (low noise amplifier, LNA), and the like. The mobile communications module 150 may receive an electromagnetic wave by using the antenna 1, perform processing such as filtering or amplification on the received electromagnetic wave, and transmit the electromagnetic wave to the modem processor for demodulation. The mobile communications module 150 may further amplify a signal modulated by the modem processor, and convert the signal into an electromagnetic wave for radiation by using the antenna 1. In some embodiments, at least some functional modules of the mobile communications module 150 may be disposed in the processor 110. In some embodiments, at least some functional modules in the mobile communications module 150 and at least some modules in the processor 110 may be disposed in a same component.

The wireless communications module 160 may provide a wireless communications solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), infrared (infrared radiation, IR), and other technologies. The wireless communications module 160 may be one or more components integrating at least one communications processing module. The wireless communications module 160 receives an electromagnetic wave by using the antenna 2, performs frequency modulation and filtering processing on the electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation by using the antenna 2.

In some embodiments, the antenna 1 of the electronic device 100 is coupled to the mobile communications module 150, and the antenna 2 is coupled to the wireless communications module 160, so that the electronic device 100 may communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division-code division multiple access (time-division code division multiple access, TD-SCDMA), long term evolution (long term evolution, LTE), BT, GNSS, WLAN, NFC, FM, IR, and/or other technologies.

It may be understood that the components shown in FIG. 1 do not constitute a specific limitation on the electronic device 100. The electronic device 100 may alternatively include more or fewer components than those shown in the figure, or have some components combined, or have some components split, or have a different component arrangement. In addition, a combination/connection relationship between components in FIG. 1 may be adjusted or modified.

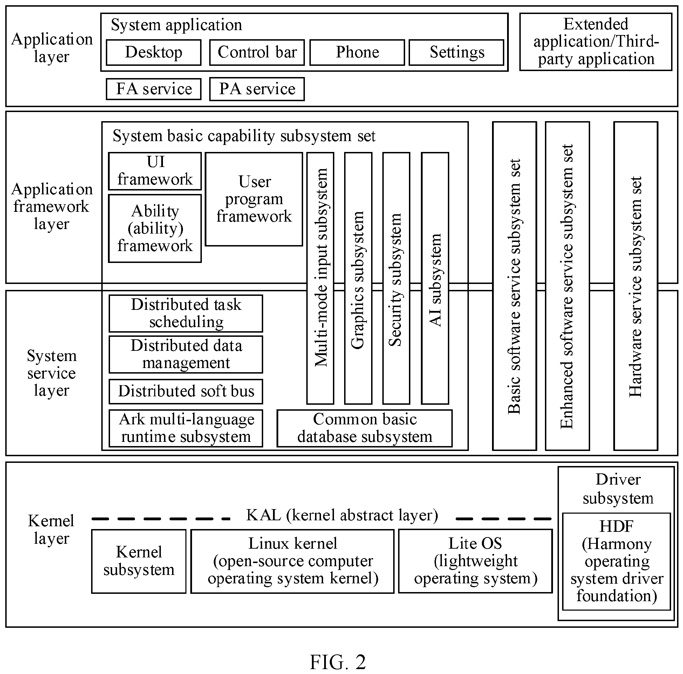

A software system of the electronic device may use a layered architecture, an event-driven architecture, a microkernel architecture, a microservice architecture, or a cloud architecture. In embodiments of this application, a software structure of the electronic device is described by using a Harmony OS with a layered architecture as an example. FIG. 2 is a block diagram of a software structure of an electronic device according to an embodiment of this application.

In the layered architecture, software is divided into several layers, and each layer has a clear role and task. The layers communicate with each other by using a software interface. In some embodiments, the Android system is divided into four layers from top to bottom: an application layer, an application framework layer, a system service layer, and a kernel layer.

The application layer includes an application and a service. The application includes a system application and a third-party application, and the service includes an FA service and a PA service. For example, the system application includes an application, an FA service, and a PA service. For example, the application is desktop, control bar, phone, or settings, the FA service is a soybean milk machine service, the PA service is a videoconferencing service, and the third-party application is a Douyin^{®} application. An application of the Harmony OS includes one or more feature ability (feature ability, FA) services and/or particle ability (particle ability, PA) services. In other words, when an application includes an FA service, the application is equivalent to an FA service; when an application includes a PA service, the application is equivalent to a PA service.

The FA service has a UI interface, and provides a capability to interact with a user. The PA service does not have a UI interface, and provides a capability of task running on background and unified data access abstraction. An application developed based on the FA/PA can implement a particular service function, and support cross-device scheduling and distribution, to provide consistent and efficient application experience for a user.

The application framework layer provides the application of the Harmony OS with user program frameworks and ability (ability) frameworks in a plurality of languages such as Java/C/C++/JS, and open multi-language framework application programming interfaces (application programming interface, API) of various software and hardware services. In addition, the application framework layer provides framework APIs in a plurality of languages such as C/C++/JS for a device using the Harmony OS. APIs supported by different devices are related to a degree of component tailoring of the system.

The system service layer is a set of core competencies of the Harmony OS, and provides a service for an application by using the framework layer. As shown in FIG. 2, the system service layer may include a system basic capability subsystem set, a basic software service subsystem set, an enhanced software service subsystem set, a hardware service subsystem set, and the like.

The system basic capability subsystem set provides basic capabilities for operations, such as running, scheduling, and migration, of a distributed application on a plurality of devices of the Harmony OS, and includes distributed soft bus, distributed data management, distributed task scheduling, Ark multi-language runtime, common basic database, multi-mode input, graphics, security, AI, and other subsystems. The Ark runtime provides a C/C++/JS multi-language runtime and a basic system class library, and also provides a runtime for a Java program staticized by using an Ark compiler (that is, a part that is at the application or framework layer and that is developed by using a Java language).

The basic software service subsystem set provides common and generic software services for the Harmony OS, and includes event notification, phone, multimedia, design for each phase of a product lifecycle (design for X, DFX), and other subsystems.

The enhanced software service subsystem set provides the Harmony OS with differentiated capability-enhanced software services for different devices, and includes smart screen dedicated service, wearable dedicated service, and Internet of things (internet of things, IoT) dedicated service, and other subsystems.

The hardware service subsystem set provides hardware services for the Harmony OS, and includes location service, biometric feature recognition, wearable dedicated hardware service, IoT dedicated hardware service, and other subsystems.

Based on deployment environments of different device forms, the basic software service subsystem set, the enhanced software service subsystem set, and the hardware service subsystem set may be internally tailored in subsystems, and each subsystem may be internally tailored in functions.

A core library includes two parts. One part is a kernel subsystem, a Linux kernel (open-source computer operating system kernel), and a Lite OS (lightweight operating system). The other part is a driver subsystem.

The kernel subsystem means that the Harmony OS is designed by using a plurality of kernels, and supports selection of appropriate OS kernels for different resource-limited devices. A kernel abstract layer (kernel abstract layer, KAL) shields differences between a plurality of kernels to provide basic kernel capabilities for an upper layer, including process/thread management, internal memory management, file system management, network management, peripheral management, and the like.

In the driver subsystem, a Harmony OS driver foundation (Harmony OS driver foundation, HDF) is a basis of Harmony OS hardware ecosystem openness, and provides a unified peripheral access capability and driver development and management framework.

The kernel layer is a layer between hardware and software. The kernel layer includes at least a display driver, a camera driver, an audio driver, and a sensor driver. The hardware may refer to various types of sensors, for example, an acceleration sensor, a gyroscope sensor, a touch sensor, and a pressure sensor in embodiments of this application.

FIG. 1 and FIG. 2 respectively show a hardware structure and a software structure of an electronic device to which embodiments of this application are applicable. To resolve the problem described in the background, an embodiment of this application provides an information ranking method. According to the method, applications or FA services on a device and another device connected to the device can be searched for and ranked, making it convenient for a user to timely and accurately find a desired application or service.

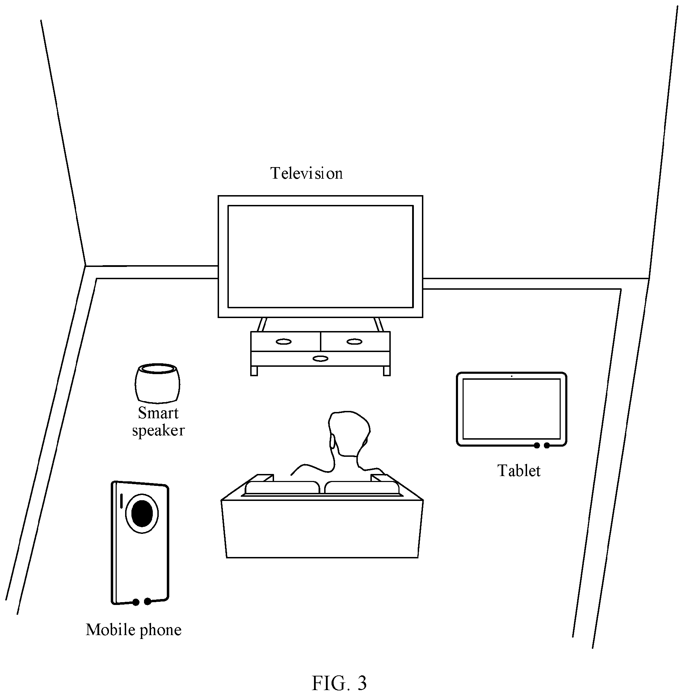

The following describes, by using examples of scenarios, the method provided in this embodiment of this application. A smart home shown in FIG. 3 is used as an example for description in each scenario. The smart home in FIG. 3 includes devices such as a smart speaker, a mobile phone, a tablet, and a smart screen in a living room. The smart screen is a large-screen product in home terminals. Compared with a conventional television, in addition to watching television programs, the smart screen may be connected to a network to watch network videos, and even support voice control to control a smart appliance in the home.

### Scenario 1

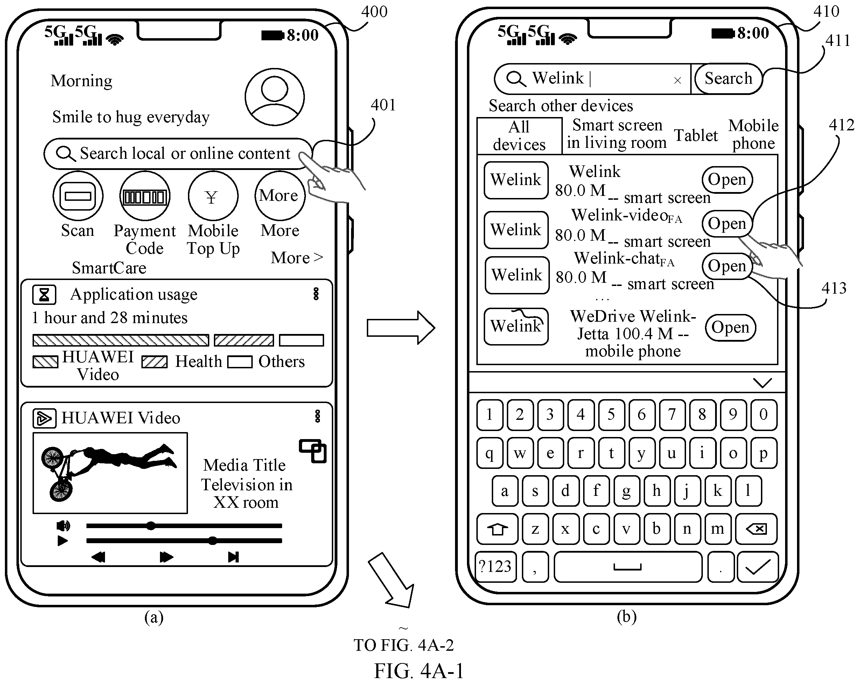

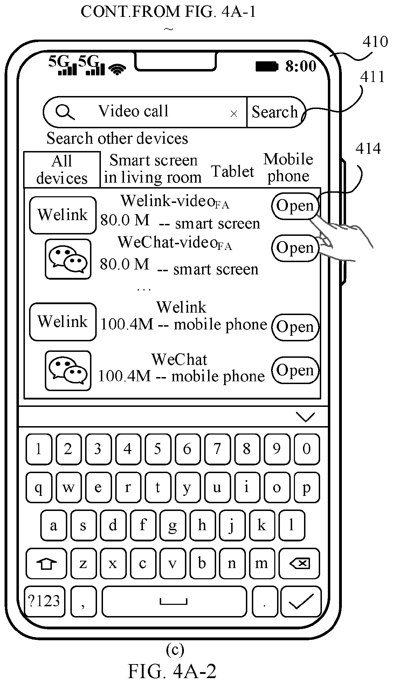

A leftmost screen 400 shown in (a) in FIG. 4A-1 is displayed in an interface of the mobile phone, and a search box 401 of the leftmost screen of the mobile phone may receive a keyword entered by a user. The user may have a plurality of devices at the same time. For example, the user has the mobile phone, the smart screen, and the tablet at the same time. An application and a service may be installed on each of the plurality of devices. Therefore, when the user enters the keyword in the search box of the leftmost screen of the mobile phone, application and FA service information related to the keyword may be found from the mobile phone of the user and another device connected to the mobile phone of the user.

It is assumed that a Welink application is installed on the smart screen of the user, and the Welink application includes one or more FA services and PA services. For example, the FA service may include a Welink-video_{FA} service and/or a Welink-chat_{FA} service, and the PA service may include a Welink-video_{PA} service and/or a Welink-chat_{PA} service. The Welink-video_{PA} service and the Welink-video_{PA} service may run independently from the Welink application. Similarly, the Welink-chat_{FA} service and the Welink-chat_{PA} service may also run independently from the Welink application. In a possible case, for example, when the user touches the search box (that is, a touch focus falls within the search box), and enters a keyword "Welink" in the search box, the mobile phone displays an interface 410 shown in (b) in FIG. 4A-1. After the user completes the keyword input operation, the mobile phone receives an operation performed by the user on a search control 411, and in response to the operation, the mobile phone performs a query operation. Specifically, the mobile phone first queries, by using an interconnection protocol, whether another device connected to the mobile phone exists in a near field, and if the another device exists, searches, based on the search keyword, the mobile phone and the another device for application and service information related to the keyword, and displays related search results in the interface 410.

For example, as shown in (b) in FIG. 4A-1, in addition to the "Welink" application that is on the mobile phone and that is related to "Welink", the interface 410 further displays the "Welink-video_{FA}" service and the "Welink-chat_{FA}" service that are on the smart screen in the living room and that are related to "Welink", a "WeDrive Welink-Jetta" application that is on the mobile phone and that is related to "Welink", and the like. It should be noted that the interface 410 may further include other applications or services related to "Welink", which are not shown one by one in the figure. The smart screen is a power-plugged device and has a relatively large screen. Therefore, the Welink-video_{FA} service that is on smart screen and that is related to a "video call" has the highest priority, and therefore is ranked the highest.

In addition, it should be noted that, if the mobile phone finds, from the near field by using the interconnection protocol, that no other device is connected to the mobile phone, the mobile phone may display, in the interface 410, only FA service information that is on the mobile phone and that is related to the keyword. For example, only the "WeDrive Welink-Jetta" application that is on the mobile phone and that is related to "Welink" is displayed. In another possible case, if the mobile phone finds, from the near field by using the interconnection protocol, that no other device is connected to the mobile phone, but the mobile phone determines that another device to which the mobile phone can be connected exists, the mobile phone may actively establish a connection to the another device, and then search the mobile phone and the another device connected to the mobile phone for FA service information related to the keyword.

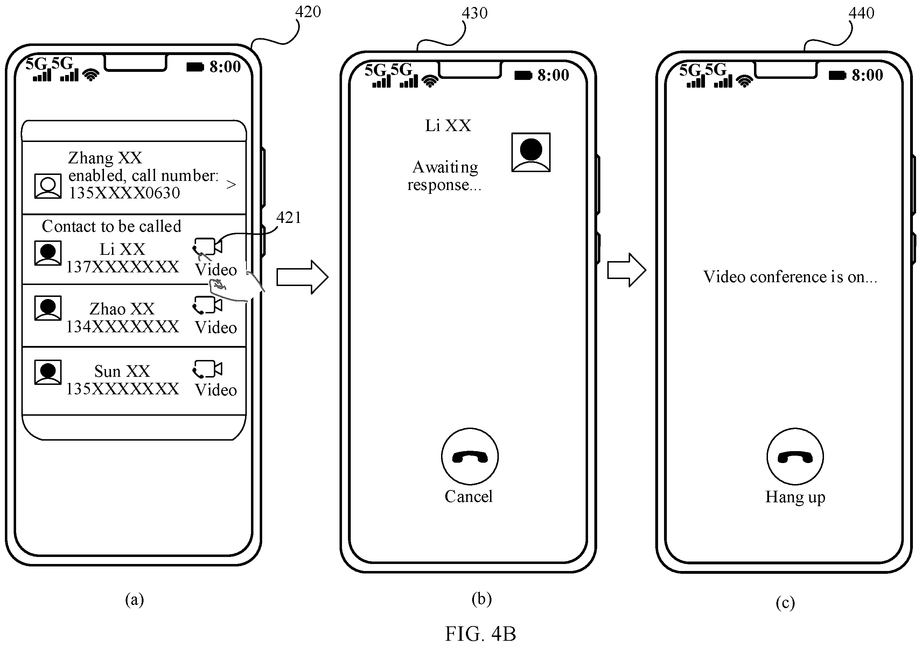

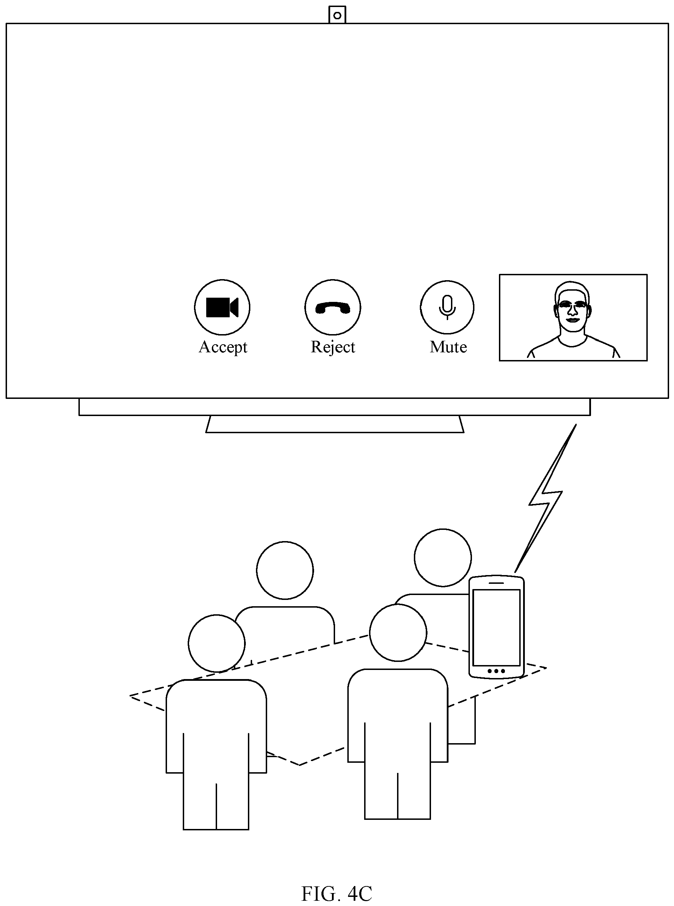

In a possible case, it is assumed that when the user chooses to touch an open control 412 corresponding to the "Welink-video_{FA}" service, that is, a target object is the "Welink-video_{FA}" service on the smart screen in the living room, the mobile phone locally runs the program on the mobile phone, to control the "Welink-video_{FA}" service on the smart screen in the living room. In other words, the user may start, on the mobile phone, a control interface of the "Welink-video_{FA}" service, and the user remotely operates the "Welink-video_{FA}" service on the smart screen in the living room by operating the control interface on the mobile phone, so that the smart screen in the living room makes a corresponding response. For example, as shown in (a) in FIG. 4B, assuming that the user acts on a video control 421 in an interface 420, in response to the operation, the mobile phone displays an interface 430 shown in (b) in FIG. 4B, that is, the user may start, on the mobile phone, the control interface of the "Welink-video_{FA}" service to make a video conference call. When a video session is established, the mobile phone displays an interface 440 shown in (c) in FIG. 4B. In addition, in response to the operation performed on the video control 421 in the interface 420, related hardware (such as a camera and a microphone) is invoked on the smart screen in the living room to start the "Welink-video_{PA}" service on the smart screen, to establish a video session connection. Finally, an interface shown in FIG. 4C is displayed. In this way, the user can operate, on the mobile phone, the "Welink-video_{FA}" service on the smart screen in the living room, to initiate a video session by using the smart screen in the living room.

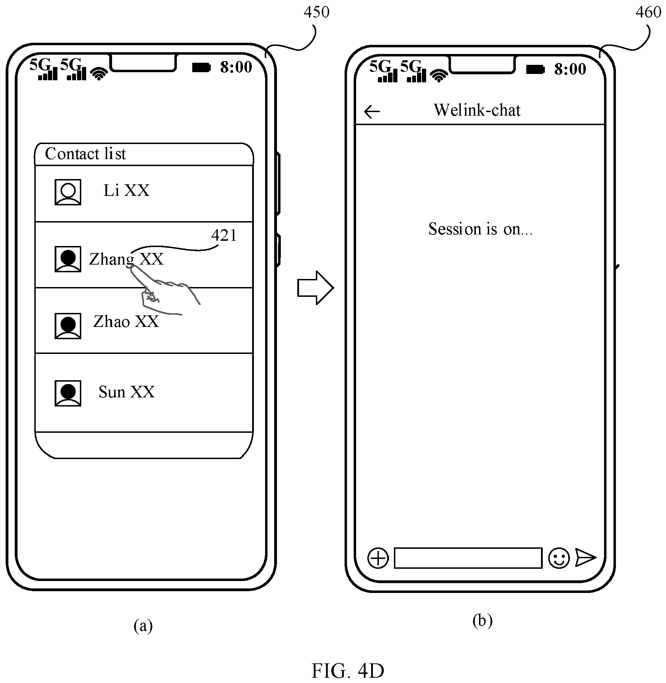

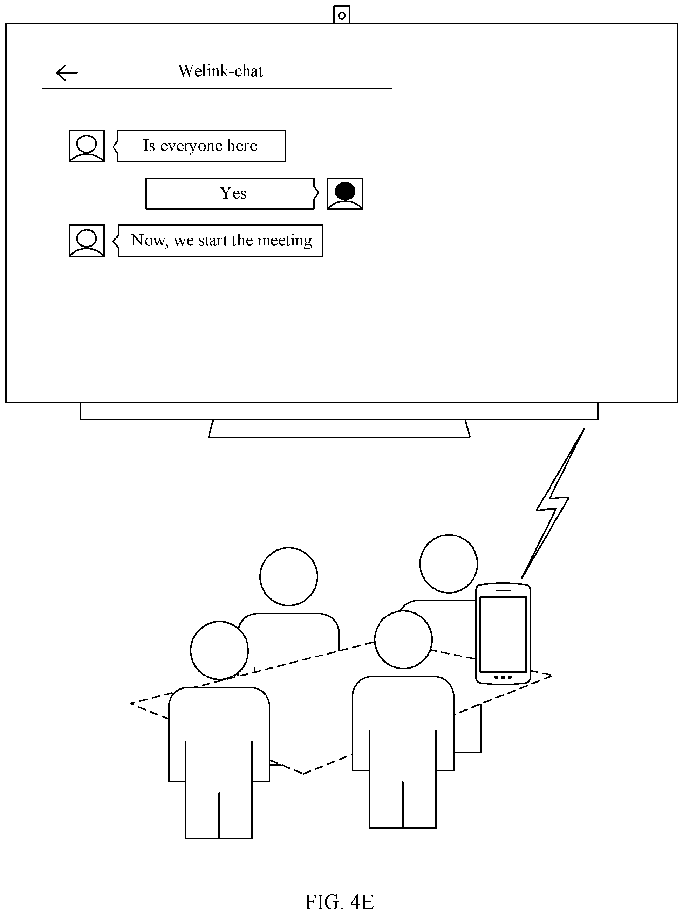

In another possible case, it is assumed that when the user chooses to touch an open control 413 corresponding to the "Welink-chat_{FA}" service, that is, a target object is the "Welink-chat_{FA}" service on the smart screen in the living room, the mobile phone locally runs the program on the mobile phone, to control the "Welink-chat_{FA}" service on the smart screen in the living room. In other words, the user may start, on the mobile phone, a control interface of the "Welink-chat_{FA}" service, and the user remotely operates the "Welink-chat_{FA}" service on the smart screen in the living room by operating the control interface on the mobile phone, so that the smart screen in the living room makes a corresponding response. For example, as shown in (a) in FIG. 4D, assuming that the user acts on a contact control 451 in an interface 450, in response to the operation, the mobile phone displays an interface 460 shown in (b) in FIG. 4D, that is, the user may start, on the mobile phone, the control interface of the "Welink-chat_{FA}" service. In addition, in response to the operation performed on the contact control 451 in the interface 450, related hardware (such as a camera and a microphone) is invoked on the smart screen in the living room to start the "Welink-chat_{PA}" service on the smart screen, to establish a short message session connection, and an interface shown in FIG. 4E is displayed. In this way, the user can operate, on the mobile phone, the "Welink-chat_{FA}" service on the smart screen in the living room, to initiate a short message session by using the smart screen in the living room.

It is assumed that a Welink application is installed on the smart screen of the user, and the Welink application includes a Welink-video_{FA} service and a Welink-chat_{FA} service. In addition, a WeChat^{®} application is also installed on the smart screen, and WeChat^{®} includes a WeChat^{®}-video_{FA} service and a WeChat^{®}-chat_{FA} service. In another possible case, for example, when the user touches the search box (that is, a touch focus falls within the search box), and enters a keyword "video call" in the search box, the mobile phone displays an interface 410 shown in (c) in FIG. 4A-2. After the user completes the keyword input operation, the mobile phone receives an operation performed by the user on a search control 411, and in response to the operation, the mobile phone performs a query operation. Specifically, the mobile phone first queries, by using an interconnection protocol, whether another device connected to the mobile phone exists in a near field, and if the another device exists, searches, based on the search keyword, the mobile phone and the another device for application and FA service information related to the keyword, and displays relatively related search results in the interface 410. For example, as shown in (c) in FIG. 4A-2, in addition to the "Welink-video_{FA}" service that is on the smart screen and that is related to the "video call", the interface 410 further displays the "WeChat^{®}-FA" service on the smart screen in the living room, a "Welink" application on the mobile phone, and a "WeChat^{®}" application on the mobile phone. It should be noted that the interface 410 may further include other applications or services related to the "video call", which are not shown one by one in the figure. The smart screen is a power-plugged device and has a relatively large screen. Therefore, the Welink-video_{FA} service that is on smart screen and that is related to the "video call" has the highest priority, and therefore is ranked the highest.

It should be noted that, as described above, the Welink application is a conference-type application, and the Welink application may include one or more FA services and PA services. For example, the FA service may include a Welink-video_{PA} service and/or a Welink-chat_{PA} service. Similarly, the WeChat^{®} application is a social-type application, and the WeChat^{®} application may include one or more FA services and PA services. For example, the FA service may include a WeChat^{®}-video_{FA} service and/or a WeChat^{®}-chat_{FA} service, and the PA service may include a WeChat^{®}-video_{PA} service and/or a WeChat^{®}-chat_{PA} service. The WeChat^{®}-video_{FA} service and the WeChat^{®}-video_{PA} service may run independently from the WeChat^{®} application. Similarly, the WeChat^{®}-chat_{FA} service and the WeChat^{®}-chat_{PA} service may also run independently from the WeChat^{®} application. The user may have a plurality of devices at the same time. For example, the user has the mobile phone, the smart screen, and the tablet at the same time. An application and a service may be installed on each of the plurality of devices. Therefore, when the user enters the keyword in the search box of the leftmost screen of the mobile phone, application and FA service information related to the keyword may be found from the mobile phone of the user and another device connected to the mobile phone of the user.

In a possible case, it is assumed that when the user chooses to touch an open control 414 corresponding to the "Welink-video_{FA}" control, that is, a target object is the "Welink-video_{FA}" service on the smart screen in the living room, the mobile phone locally runs the program on the mobile phone, to control the "Welink-video_{FA}" service on the smart screen in the living room. In other words, the user may start, on the mobile phone, a control interface of the "WelinkFA-video_{FA}" service, and the user remotely operates the "WelinkFA-video_{FA}" service on the smart screen in the living room by operating the control interface on the mobile phone, so that the smart screen in the living room makes a corresponding response. For a specific example, refer to the foregoing examples shown in FIG. 4B to FIG. 4D. Details are not described herein again.

In this embodiment, in addition to a name of the FA service, a label of the FA service further includes a device attribute, a device type, a function description, an FA service package name, and the like. For example, the device attribute may be a large-screen device or a small-screen device, the device type may be a smart screen type or a smart screen device number, and the function description of the FA service may be a video-type service or a music-type service or the like. Generally, when the FA service is released in the application market, the FA service is manually marked with labels related to the device attribute, the device type, the function description, and the FA service package name. Based on this, in addition to entering the name of the FA service in the search box, the user may alternatively enter an attribute of the FA service in the search box. For example, the attribute of the FA service may be a function feature of the FA service. Assuming that the user enters a "video call" in the search box, "Welink-video_{FA}", "WeChat^{®}-video_{FA}", and the like related to the "video call" may be found. Alternatively, the attribute of the FA service may be a service type of the FA service. Assuming that the user enters "music" in the search box, "music_{FA}", "Himalaya^{®}_{FA}", and the like related to the "music" may be found. Alternatively, the attribute of the FA service may be a device name strongly related to the FA service. Assuming that the user enters a "smart screen" in the search box, "Welink-video_{FA}", "WeChat^{®}-video_{FA}", and the like related to the "smart screen" may be found. When the user chooses to open an FA service on another device in search results of the mobile phone, processes of running the FA service, displaying a control interface, and starting a corresponding PA service on the another device by the mobile phone are similar to the processes described in FIG. 4B to FIG. 4E, and are not shown herein by using examples one by one.

In this embodiment, a method of ranking search results by the mobile phone may be specifically any one or a combination of the following manners.

Manner 1: The mobile phone may obtain, based on the keyword, labels of N candidate FA services related to the keyword, and then calculate semantic similarities between the keyword and the labels of the N candidate FA services; and determine, based on values of the semantic similarities, an FA service corresponding to a semantic similarity greater than a specified threshold. An FA service with a larger semantic similarity is ranked higher. For example, four FA services whose semantic similarities are greater than the specified threshold are displayed in the interface 410.

Manner 2: The mobile phone may obtain, based on the keyword, labels of N candidate FA services related to the keyword, and then calculate a term frequency or distribution of the keyword in the labels of the N candidate FA services. On one hand, if more FA services related to the keyword exist on the mobile phone, in search results below "all devices" in the interface 410, search results of the mobile phone are higher than a search result of another device. In other words, a device with more FA services related to the keyword is ranked higher. On the other hand, if an FA service related to the keyword is evenly distributed on the mobile phone and another device, the FA service is ranked lower. On the contrary, if an FA service related to the keyword is distributed only on some device (for example, on the smart screen in the living room) at a high frequency, the FA service of the device is ranked higher.

Manner 3: The mobile phone may obtain device statuses of the mobile phone and another device, for example, a power supply type of the device, a screen size of the device, an available computing resource of the device, and a correlation between device performance and the target FA service, and obtain a priori knowledge constraint condition related to the FA service, and then rank FA services in search results based on the device statuses and the priori knowledge constraint condition related to the FA service. The priori knowledge constraint condition related to the FA service may include as follows: the FA service preferentially runs on a large-screen device, the FA service preferentially runs on a device of a power-plugged type, the FA service preferentially runs on a device with a strong computing capability, or the FA service preferentially runs on a device with good audio playing performance. For example, a priori knowledge constraint condition of the "Welink-video_{FA}" service is preferentially running on a large-screen device and preferentially running on a power-plugged device. A device status of the smart screen in the living room is a large-screen device and a power supply type being the power-plugged type. Therefore, a matching degree between the smart screen in the living room and the "Welink-video_{FA}" service is relatively high. Therefore, the "Welink-video_{FA}" service on the smart screen in the living room is the highest.

### Scenario 2

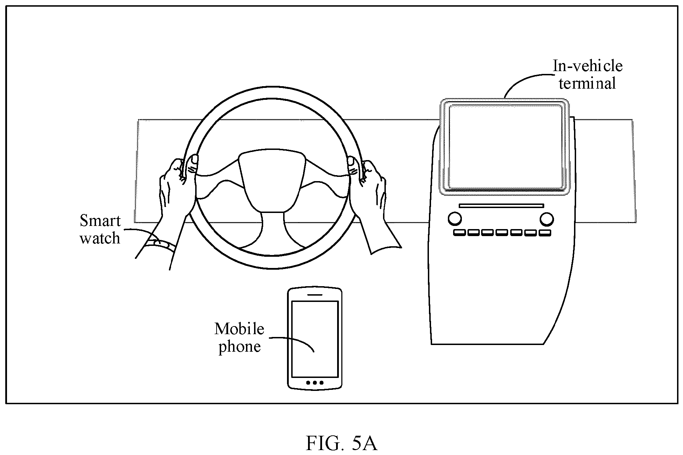

This scenario is described by using a driving scenario shown in FIG. 5A as an example. FIG. 5A shows devices including an in-vehicle terminal, a mobile phone, a smartwatch, and the like. Assuming that a family member A who takes a back-row ride in a vehicle needs navigation, the family member A may operate a mobile phone of the family member A, to control the in-vehicle terminal to perform map navigation.

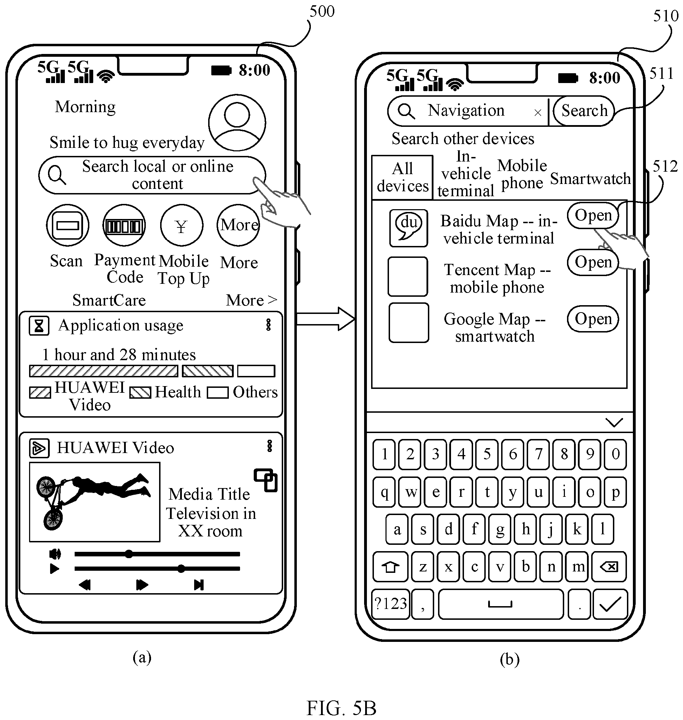

For example, as shown in FIG. 5B, an interface of the mobile phone displays a leftmost screen 500 shown in (a) in FIG. 5B. When the user touches a search box (that is, a touch focus falls within the search box) and prepares to enter a keyword, the mobile phone displays an interface 510 shown in (b) in FIG. 5B. It is assumed that the user enters "navigation" in the interface 510. After the user completes the keyword input operation, the mobile phone receives an operation performed by the user on a search control 511. In response to the operation, the mobile phone searches the mobile phone and another device (for example, the smartwatch and the in-vehicle terminal in the vehicle) for application information related to the keyword "navigation", and then displays, in the interface 510 based on a query result, search results related to the search keyword "navigation". For example, as shown in (b) in FIG. 5B, in addition to a "Tencent Map^{®}" application that is on the mobile phone and that is related to "navigation", the interface 510 further displays a "Google Map^{®}" application that is on the smartwatch and that is related to "navigation", and a "Baidu Map^{®}" application that is on the in-vehicle terminal and that is related to "navigation".

Assuming that the user determines to select and touch the "Baidu Map^{®}" application on the mobile phone, the mobile phone receives an operation performed by the user on a "Baidu Map^{®}" application control 512, and the mobile phone locally runs the program, to control the "Baidu Map^{®}" application on the in-vehicle terminal. In this way, the user can start a navigation service of "Baidu Map^{®}" on the in-vehicle terminal by operating on the mobile phone.

In this embodiment, a method of ranking search results by the mobile phone may be specifically as follows: After establishing connections to the in-vehicle terminal and the smartwatch, the mobile phone may obtain a device status of the in-vehicle terminal and a device status of the smartwatch in addition to a status of the device itself. For example, the device status of the in-vehicle terminal is in a power-on and running state, a device of a power-plugged type, and sufficient computing resources. The device status of the smartwatch includes a battery-powered device and insufficient computing resources. In addition, the mobile phone further obtains a priori knowledge constraint condition related to the "Baidu Map^{®}" application. For example, the mobile phone obtains, from a cloud server, a priori knowledge constraint condition related to the "Baidu Map^{®}" application, which is preferentially running on a device of the power-plugged type, and preferentially running on a device with a strong computing capability. The mobile phone ranks "Baidu Map^{®}" applications in the search results based on the priori knowledge constraint condition related to the "Baidu Map^{®}" application and the device statuses of the devices. Because the device status of the in-vehicle terminal is sufficient computing resources and a power supply type being the power-plugged type, a matching degree between the in-vehicle terminal and the "Baidu Map^{®}" application is relatively high. Therefore, the "Baidu Map^{®}" application on the in-vehicle terminal is ranked the highest, followed by the "Tencent Map^{®}" application on the mobile phone, and then the "Google Map^{®}" application on the smartwatch.

It should be noted that the example shown in the scenario 2 is also applicable to searching and ranking of navigation-type FA services. That is, if the user enters "navigation" in the search box, search results may include an FA service that is on the smartwatch and that is related to "navigation" and an FA service that is on the in-vehicle terminal and that is related to "navigation". The user may operate, on the mobile phone, the FA service of the in-vehicle terminal, to start a PA service that is on the in-vehicle terminal and that is related to navigation. For details, refer to the examples shown in the scenario 1, and examples are not shown herein by using figures one by one.

### Scenario 3

This scenario is still described by using the smart home shown in FIG. 3 as an example.

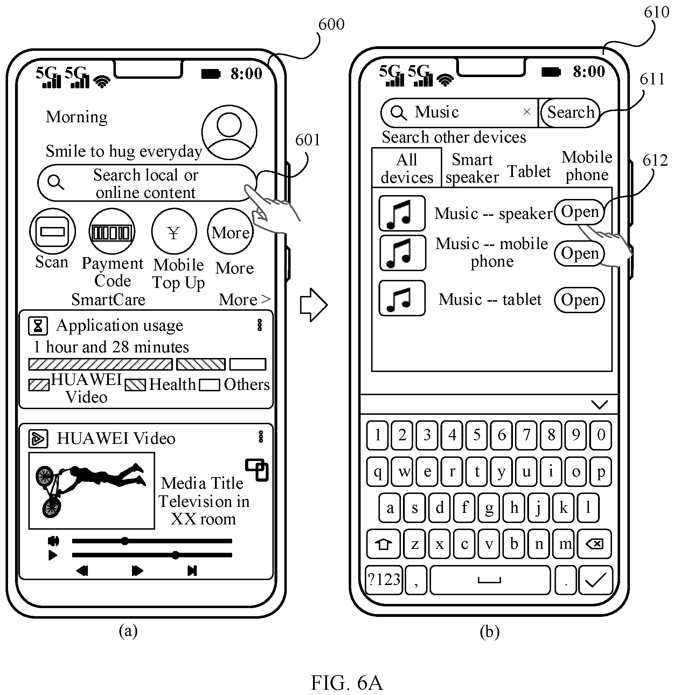

For example, a leftmost screen 600 shown in (a) in FIG. 6A is displayed in an interface of the mobile phone, and a search box 601 of the leftmost screen of the mobile phone may receive a keyword entered by a user. When the user touches the search box (that is, a touch focus falls within the search box) and prepares to enter a keyword, the mobile phone displays an interface 610 shown in (b) in FIG. 6A. It is assumed that the user enters "music" in the interface 610. After the user completes the keyword input operation, the mobile phone receives an operation performed by the user on a search control 611, and in response to the operation, the mobile phone performs a query operation. Specifically, the mobile phone first queries, by using an interconnection protocol, whether another device connected to the mobile phone exists in a near field, and if the another device exists, searches, based on the search keyword, the mobile phone and the another device for application information related to the keyword "music", and displays relatively related search results in the interface 610. For example, as shown in (b) in FIG. 6A, in addition to a control for a "music" application on the mobile phone, the interface 610 further displays a control for a "music" application on the tablet and a control for a "music" application on the smart speaker.

In this embodiment, a method of ranking the search results in the interface 610 by the mobile phone may be specifically as follows: After establishing connections to the smart speaker and the tablet, the mobile phone may further obtain a device status of the tablet and a device status of the smart speaker in addition to a status of the device itself. For example, the device status of the smart speaker is a device of a power-plugged type and good audio playing performance. The device status of the tablet includes a battery-powered device and good video playing performance. In addition, the mobile phone further obtains a priori knowledge constraint condition related to the "music" application. For example, the mobile phone obtains, from a cloud server, a priori knowledge constraint condition related to the "music" application, which is preferentially running on a device of the power-plugged type, and preferentially running on a device with good audio playing performance. The mobile phone ranks the "music" applications in the search results based on the priori knowledge constraint condition related to the "music" application and the device statuses of the devices. Because the device status of the smart speaker is good audio playing performance and a power supply type being the power-plugged type, a matching degree between the smart speaker and the "music" application is relatively high. Therefore, the "music" application on the smart speaker is ranked the highest, followed by the "music" application on the mobile phone, and then the "music" application on the tablet.

Further, it is assumed that when the user chooses to touch an open control 612 corresponding to the "music" application, that is, a target object is the "music" application on the smart speaker, the mobile phone locally runs the program on the mobile phone, to control the "music" application on the smart speaker. In other words, the user may start, on the mobile phone, a control interface of the "music" application, and the user remotely operates the "music" application on the smart speaker by operating the control interface on the mobile phone, so that the smart speaker makes a corresponding response.

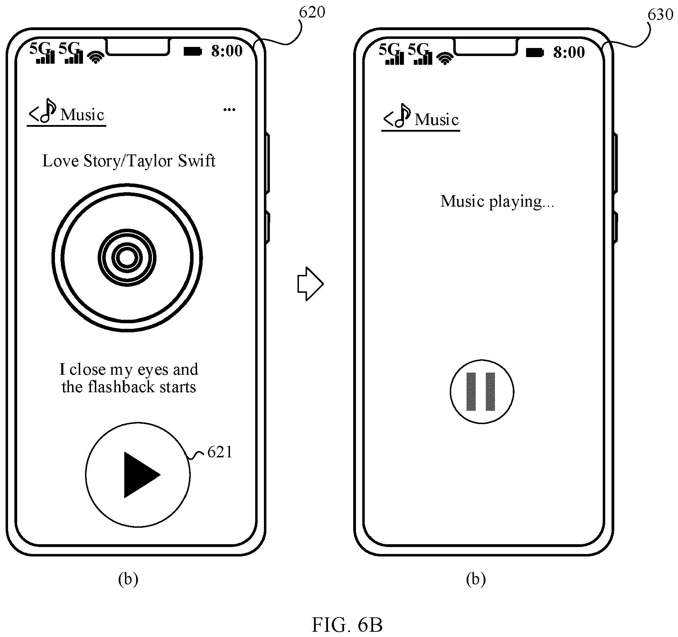

For example, as shown in (a) in FIG. 6B, assuming that the user acts on a play control 621 in an interface 620, in response to the operation, the mobile phone displays an interface 630 shown in (b) in FIG. 6B, that is, the user may start, on the mobile phone, the control interface of the "music" application, to control the smart speaker to start playing music. In addition, in response to the operation performed on the play control 621 in the interface 620, related hardware (such as a speaker) is invoked on the smart speaker to start the "music" application, to play music. In this way, the user can operate, on the mobile phone, the "music" application on the smart speaker, to control the smart speaker to play music.

It should be noted that the example shown in the scenario 3 is also applicable to searching and ranking of music-type FA services. That is, if the user enters "music" in the search box, search results may include an FA service that is on the speaker and that is related to "music" and an FA service that is on the tablet and that is related to "music". The user may operate, on the mobile phone, the FA service on the speaker, to start a PA service that is on the speaker and that is related to music. For details, refer to the examples shown in the scenario 1, and examples are not shown herein by using figures one by one.

With reference to the foregoing scenario 1 to scenario 3, specifically, a specific method of searching, by the mobile phone based on a search keyword, the mobile phone and another device for application information or service information related to the keyword may be any one or a combination of the following manners.

Manner 1: The mobile phone may obtain labels of N candidate objects based on the keyword, and then calculate semantic similarities between the keyword and the labels of the N candidate objects; and determine, based on values of the semantic similarities, an application or a service corresponding to a semantic similarity greater than a specified threshold. An application or a service with a larger semantic similarity is ranked higher.

Manner 2: The mobile phone may obtain labels of N candidate objects based on the keyword, and then calculate a term frequency or distribution of the keyword in the labels of the N candidate objects. On one hand, if more applications or services related to the keyword exist on the mobile phone, in search results below "all devices" in an interface, search results of the mobile phone are higher than a search result of another device. In other words, a device with more applications or services related to the keyword is ranked higher. On the other hand, if an application or a service related to the keyword is evenly distributed on the mobile phone and another device, the application or the service is ranked lower. On the contrary, if an application or a service related to the keyword appears only on some device (for example, on the smart screen in the living room), the application or the service is ranked higher.

Manner 3: The mobile phone may obtain device statuses of the mobile phone and another device, for example, a power supply type of the device, a screen size of the device, an available computing resource of the device, and a correlation between device performance and the target object, and obtain a priori knowledge constraint condition related to the application or the service, and then rank applications or services in the search results based on the device statuses and the priori knowledge constraint condition related to the application or the service. The priori knowledge constraint condition related to the application or the service may include as follows: the application or the service preferentially runs on a large-screen device, the application or the service preferentially runs on a device of the power-plugged type, the application or the service preferentially runs on a device with a strong computing capability, or the application or the service preferentially runs on a device with good audio playing performance.

In this way, search results obtained by ranking in the manner 3 may have the following features:
Feature 1: If a device is in a state of being used by the user, an application or a service that is on the device and that is related to the keyword is ranked higher. For example, if the user is browsing video information on the smart screen in the living room, if the user searches, by using the mobile phone, for some applications or services related to video information, an application or a service related to a large screen is ranked higher in search results. In this way, a startup time of the application or the service on the device is reduced, and the large screen makes it more convenient for the user to view information.
Feature 2: If user experience of an application or a service on a device A is better, search information about the device A is ranked higher. A music playing application is used as an example. When search results include applications on a speaker, a large screen, a mobile phone, and a tablet, the application on the speaker is ranked higher.
Feature 3: If power consumption of an application or a service is relatively high during use, a related application or service on a power-plugged device that can support high power consumption is ranked higher. A game is used as an example. If a mobile phone, a tablet, and a large screen all support the game, a game application on the large screen is ranked higher, because the large screen is usually a power-plugged device and does not need to consider power consumption.
Feature 4: If an application or a service needs to occupy more computing resources during use, a related application or service on a device with more sufficient computing resources is ranked higher.

Manner 4: The mobile phone may obtain device statuses of the mobile phone and another device, and obtain a priori knowledge constraint condition related to applications or services; then based on the device statuses and the priori knowledge constraint condition related to the application or the service, determine, based on semantic similarities between the keyword and labels of the applications or the services or a term frequency or distribution status, first weight respectively corresponding to the applications or the services; and determine, based on matching degrees between the priori knowledge constraint condition related to the applications or the services and the device statuses, second weights respectively corresponding to the applications or the services; and then rank the found applications or services based on the first weights and the second weights. Specifically, if search results include application labels and/or service labels that are on a plurality of devices and that correspond to a same application or service, the application labels and/or the service labels on the plurality of devices need to be ranked based on matching degrees between a priori knowledge constraint condition related to the application or the service and device statuses. For example, a "Welink-video_{FA}" service is found on a mobile phone, a tablet, and a smart screen. Because a priori knowledge constraint condition related to the "Welink-video_{FA}" application or service is preferentially running on a large screen and preferentially running on a power-plugged device, the "Welink-video_{FA}" application or service label on the smart screen is ranked higher in search results.

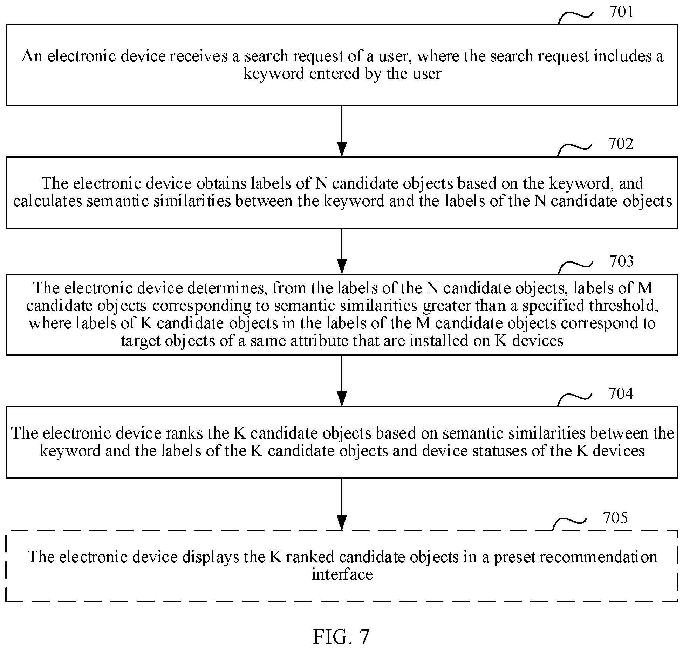

With reference to the example of the scenario 1, in summary, an embodiment of this application provides an information ranking method. The method may be applied to a device in a distributed system. Specifically, as shown in FIG. 7, the method includes the following steps.

Step 701: An electronic device receives a search request of a user, where the search request includes a keyword entered by the user.

For example, the search request may be content entered by the user by touching, or content entered by using a voice instruction. When the user enters content, the electronic device may perform broad keyword matching by using information entered by the user. After the user completes keyword input, the electronic device may perform exact keyword matching based on the keyword entered by the user.

Step 702: The electronic device obtains labels of N candidate objects based on the keyword, and calculates semantic similarities between the keyword and the labels of the N candidate objects.

Specifically, in a possible embodiment, the electronic device may calculate the semantic similarities between the search word and the plurality of candidate object programs based on a deep neural network model. The deep neural network model may be a machine model generated in advance by training based on a training corpus obtained from candidate objects.

In a possible embodiment, before performing step 702, the electronic device obtains, from a database, detailed information about L candidate objects, then extracts original keywords from the detailed information about the L candidate objects, performs semantic parsing on the original keywords, and obtains labels of the L candidate objects from a parsing result. For example, detailed information about an application includes but is not limited to information such as a title of the application, a description text of the application, comment information about the application, a recommendation of the application, and a latest update feature of the application. A label of the application includes but is not limited to information such as a name of the application, a category to which the application belongs, and a feature of the application. Detailed information about a service includes but is not limited to information such as a title of the service, a description text of the service, comment information about the service, a recommendation of the service, and a latest update feature of the service. A label of the service includes but is not limited to information such as a name of the service, a category to which the service belongs, and a feature of the service.

Specifically, in a first step, after the detailed information about the L candidate objects is obtained from the database, word segmentation may be first performed on the detailed information about the candidate objects. For example, a user-defined dictionary may be constructed, and a to-be-analyzed Chinese character string is matched against an entry in the user-defined dictionary based on a preset policy. If a character string can be found in the user-defined dictionary, matching succeeds (that is, a word is recognized). Based on different scanning directions, the string-matching word segmentation method may be classified into forward matching and reverse matching. Based on preferential matching for different lengths, the string-matching word segmentation method may be classified into maximum (longest) matching and minimum (shortest) matching. In actual application, a specific word segmentation method may be selected as required. In a second step, after word segmentation is complete, a stop word and an invalid word may be filtered out. For example, information that is described in a description text of an object and that is unrelated to the object, such as self-introduction of a developer and contact information left by the developer, may be filtered out. Advertisement or promotion information, for example, a promotion advertisement in a shopping application and game currency marketing information in a game application, may be filtered out. In addition, numbers, pinyin, or the like may be filtered out. For example, a specific filtering method is as follows: A regular filtering rule may be constructed to filter out a word that matches the regular filtering rule. For example, the constructed regular filtering rule includes "contact information", "email", "phone number", and the like. Then, information such as contact information, an email, and a phone number in detailed information about an object may be filtered out. In a third step, after the stop word and the invalid word are filtered out, obtained words may be screened to obtain at least one keyword. For example, part-of-speech screening is performed to select a verb, a noun, and the like.

In another possible embodiment, if a large quantity of original keywords are obtained through screening, a term frequency (term frequency, TF) of each original keyword may be calculated. The term frequency represents a frequency at which a word appears in a document. In addition, an inverse document frequency (inverse document frequency, IDF) of each keyword is calculated. The inverse document frequency is obtained by dividing a total quantity of documents in the database by a quantity of documents including the word, and then obtaining a logarithm based on an obtained quotient. A product of the term frequency and the inverse document frequency of each keyword is used as a TF-IDF value of the corresponding keyword, and a keyword whose TF-IDF value is greater than a preset threshold is selected as an original keyword. A value of the preset threshold may be customized based on an actual requirement. In addition, if only a few keywords are obtained through screening, only similarity matching may be performed. Then, the electronic device performs semantic parsing on the original keywords by using a semantic parsing model, to generate the labels of the objects.

Step 703: The electronic device determines, from the labels of the N candidate objects, labels of M candidate objects corresponding to semantic similarities greater than a specified threshold.

Labels of K candidate objects in the labels of the M candidate objects correspond to target objects of a same attribute that are installed on K devices, M≤N, and M, N, and K are positive integers greater than or equal to 2. The target objects of the same attribute on the K devices may be target objects with a same name on the K devices, for example, WeChat^{®} applications on a mobile phone and a tablet. Alternatively, the target objects of the same attribute on the K devices may be target objects from a same vendor on the K devices. For example, a TikTok^{®} application on a mobile phone and a Douyin^{®} application on a tablet are applications from a same vendor ByteDance^{®}. Alternatively, the target objects of the same attribute on the K devices may be target objects with a same installation package on the K devices. For example, names of installation packages of WeChat^{®} applications on a mobile phone and a tablet are the same. Alternatively, the target objects of the same attribute on the K devices may be target objects with a same function on the K devices. For example, both a TikTok^{®} application on a mobile phone and a Douyin^{®} application on a tablet have a short video sharing function.

For example, the labels of the M candidate objects include a label of a "Welink" object on a mobile phone, a label of a "Welink" object on a smart screen, and a label of a "Welink" object on a tablet.

Step 704: The electronic device ranks the K candidate objects based on semantic similarities between the keyword and the labels of the K candidate objects and device statuses of the K devices.

In a possible embodiment, the electronic device may determine first weights and second weights respectively corresponding to the K candidate objects, and rank the K candidate objects based on the first weights and the second weights.

Specifically, the electronic device determines that a larger one of the semantic similarities between the keyword and the labels of the K candidate objects indicates a larger first weight; and on the contrary, a smaller semantic similarity indicates a smaller first weight. For example, the mobile phone determines, based on a semantic similarity between the keyword and a label of a "Welink" service on the mobile phone, that a first weight of the "Welink" service on the mobile phone is K1. The mobile phone determines, based on a semantic similarity between the keyword and a label of a "Welink" service on the smart screen, that a first weight of the "Welink" service on the smart screen is K2. The mobile phone determines, based on a semantic similarity between the keyword and a label of a "Welink" service on the tablet, that a first weight of the "Welink" service on the tablet is K3.

In addition, the electronic device determines, based on matching degrees between a priori knowledge constraint condition related to the target object and the device statuses of the K devices, second weights respectively corresponding to the K candidate objects.

The priori knowledge constraint condition related to the target object includes at least one of the following conditions: the target object preferentially runs on a large-screen device, the target object preferentially runs on a device of a power-plugged type, the target object preferentially runs on a device with a strong computing capability, and the target object preferentially runs on a device with good audio playing performance. For example, it is assumed that the target object is the "Welink-video_{FA}" service in the scenario 1. Because the "Welink-video_{FA}" service is office conference software, a priori knowledge constraint condition related to the "Welink-video_{FA}" service includes preferentially running on a large-screen device. For another example, it is assumed that the target object is "music" in the scenario 3. Because "music" is music-type software, a priori knowledge constraint condition related to a "music" service includes preferentially running on a device with good audio playing performance.

It should be noted that the priori knowledge constraint condition related to the target object may be a condition preset by a developer. The electronic device may obtain the constraint condition when downloading an application or a service from a server, or the electronic device may periodically obtain the constraint condition from a cloud server. This is not limited in this embodiment of this application.

In addition, the status of the device includes at least one of the following states: a power supply type of the device, a screen size of the device, an available computing resource of the device, and a correlation between device performance and the target object. For example, a power supply type of a mobile phone is usually a battery, a power supply type of a smart screen in a living room is a power-plugged type, audio playing performance of a speaker is more related to a music-type application or service, and so on.

For example, it is assumed that the priori knowledge constraint condition of the "Welink-video_{FA}" service is preferentially running on a large screen and preferentially running on a power-plugged device. A device status of the mobile phone is a battery-powered type and a screen size being 7 inches. A device status of the smart screen in the living room is the power-plugged type and a screen size being 55 inches. A device status of a tablet is the battery-powered type and a screen size being 7.9 inches. In this case, the mobile phone determines, based on a matching degree between the device status of the mobile phone and the priori knowledge constraint condition of the "Welink-video_{FA}" service, that a second weight of the "Welink-video_{FA}" service on the mobile phone is L1. The mobile phone determines, based on a matching degree between the device status of the smart screen in the living room and the priori knowledge constraint condition of the "Welink-video_{FA}" service, that a second weight of the "Welink-video_{FA}" service on the mobile phone is L2. The mobile phone determines, based on a matching degree between the device status of the tablet and the priori knowledge constraint condition of the "Welink-video_{FA}" service, that a second weight of the "Welink-video_{FA}" service on the mobile phone is L3.

In a possible embodiment, a manner in which the electronic device determines the second weights respectively corresponding to the K candidate objects may be any one or a combination of the following manners.

Manner 1: When the priori knowledge constraint condition related to the target object is that the target object preferentially runs on a device of the power-plugged type, it is determined that a second weight of a corresponding candidate object on a device that supports the power-plugged type is greater than a second weight of a corresponding candidate object on a device that does not support the power-plugged type in the K devices corresponding to the K candidate objects. For example, if search results of the mobile phone include the "Welink-video_{FA}" service of the smart screen in the living room, "Welink-video_{FA}" on the smart screen in the living room is ranked higher in a column of "all devices", and the "Welink-video_{FA}" service on the mobile phone or the tablet is ranked lower. Because the smart screen in the living room is a power-plugged device that can support high power consumption, there is basically no problem of insufficient power.

Manner 2: When the priori knowledge constraint condition related to the target object is that the target object preferentially runs on a large-screen device, it is determined that a corresponding candidate object on a device with a larger screen has a larger second weight in the K devices corresponding to the K candidate objects. For example, if search results include the "Welink-video_{FA}" service of the smart screen in the living room, "Welink-video_{FA}" on smart screen in the living room is ranked higher in a column of "all devices", and the "Welink-video_{FA}" service on the mobile phone or the tablet is ranked lower. This is because the smart screen in the living room is a large-screen device, which makes it more convenient for a plurality of users to view information on the large screen at the same time.

Manner 3: When the priori knowledge constraint condition related to the target object is that the target object preferentially runs on a device with a strong computing capability, it is determined that a corresponding candidate object on a device having a stronger computing capability has a larger second weight in the K devices corresponding to the K candidate objects. For example, if search results include an "AI photographing" service of the smart screen in the living room, "AI photographing" on the smart screen in the living room is ranked higher in a column of "all devices", and an "AI photographing" service on the mobile phone or the tablet is ranked lower. This is because the smart screen in the living room is a device with a strong processing capability and has higher data processing efficiency.

Manner 4: When the priori knowledge constraint condition related to the target object is that the target object preferentially runs on a device with good audio playing performance, it is determined that a device with better audio playing performance has a larger second weight in the K devices corresponding to the K candidate objects. For example, if search results include a "music" service of a smart speaker, "music" on the smart speaker is ranked higher in a column of "all devices", and a "music" service on the mobile phone or the tablet is ranked lower. This is because the smart speaker has a good audio playing capability and is a device strongly related to the "music" service.

It should be noted that, with extension of application types in an application market and extension of service types in the application market, there may be an application or a service of another type in a future market, or a priori knowledge constraint condition related to an application or a service may be updated as the application or the service is updated. Therefore, a manner in which the electronic device determines the second weights respectively corresponding to the K candidate objects is not limited in this embodiment of this application. In the future, there may be a manner of determining a second weight by using another priori knowledge constraint condition.

In a possible case, the electronic device may calculate products of the first weights and the second weights, and rank the K candidate objects based on values of the products. For example, a larger product indicates being ranked higher, or a smaller product indicates being ranked higher.

In another possible case, the electronic device may further adjust the products of the first weights and the second weights with reference to a recommendation result of SmartCare in the device and information such as a use habit of a user, and rank the K candidate objects by using adjusted products of the second weights and the first weights.

Optionally, after the K candidate objects are ranked, this embodiment of this application may further include step 705: The electronic device displays the ranked K candidate objects in a preset recommendation interface. A candidate object with a larger product of the first weight and the second weight is ranked higher. For example, as shown in (b) in FIG. 4A-1, in recommendation results in a column of "all devices" in the leftmost screen 600, the "Welink-video_{FA}" service and the "Welink-chat_{FA}" service of the smart screen in the living room are displayed highest, followed by the "Welink-video_{FA}" service of the tablet, and finally the "Welink-video_{FA}" service of the mobile phone.

In another possible case, the electronic device may further obtain labels of the devices from the database or the server, and then calculate similarities between the keyword and the labels of the devices, to determine, based on the similarities, third weights of the K candidate objects corresponding to the K devices. Further, the electronic device may rank the K candidate objects based on the first weights, the second weights, and the third weights. For example, a label of the smart screen in the living room includes video, conference, and the like, and a label of the mobile phone includes call, Internet access, and the like. The mobile phone may obtain the labels of the devices from the cloud server. The label may be content preset by a developer, or may be actively marked by a user and then uploaded to the cloud server. This is not limited in this application.

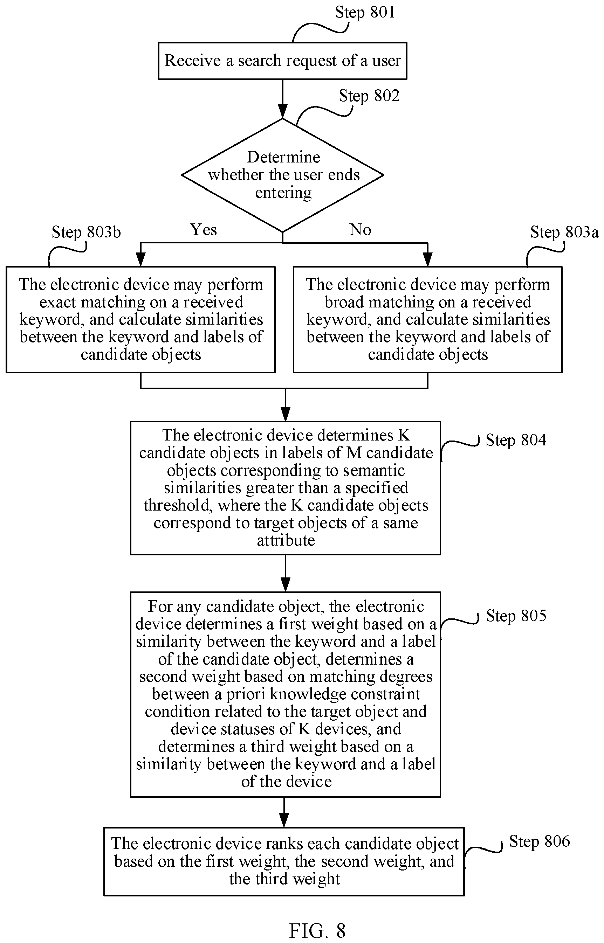

Specifically, an embodiment of this application provides a method flowchart shown in FIG. 8. The method includes the following steps.

Step 801: An electronic device receives a search request of a user, where the search request includes a keyword entered by the user.

For details, refer to step 701.

Step 802: When the electronic device receives an entered word, the electronic device may determine, in real time, whether the user ends entering; and if the user has not ended the entering, perform step 803a; otherwise, perform step 803b.

For example, when the user enters "Welink", the mobile phone determines, when each character is received, whether the entering is ended.

Step 803a: If the entering is not ended, the electronic device may perform broad matching on a received keyword, and calculate similarities between the keyword and labels of candidate objects.

For example, the electronic device performs broad matching on a received keyword "We", and calculates similarities between the keyword "We" and the labels of the candidate objects.

Step 803b: If the entering is ended, the electronic device may perform exact matching on a received keyword, calculate similarities between the keyword and labels of candidate objects, and calculate similarities between a priori knowledge constraint condition related to the candidate objects and statuses of devices.

Step 804: The electronic device determines K candidate objects in labels of M candidate objects corresponding to semantic similarities greater than a specified threshold, where the K candidate objects correspond to target objects of a same attribute.

Step 805: For any one of the K candidate objects, the electronic device determines a first weight based on a similarity between the keyword and a label of the candidate object, the electronic device determines a second weight based on a similarity between the priori knowledge constraint condition related to the candidate objects and a status of a device, and the electronic device determines a third weight based on a similarity between the keyword and a label of the device.

Step 806: The electronic device ranks each candidate object based on the first weight, the second weight, and the third weight.

In this embodiment, search results obtained after such ranking have the following features: An application or a service whose label is closer to the keyword in semantics is ranked higher. A search result of a device whose label is closer to the keyword in semantics is ranked higher. A search result of a device whose status better matches a priori knowledge constraint condition related to candidate objects is ranked higher.

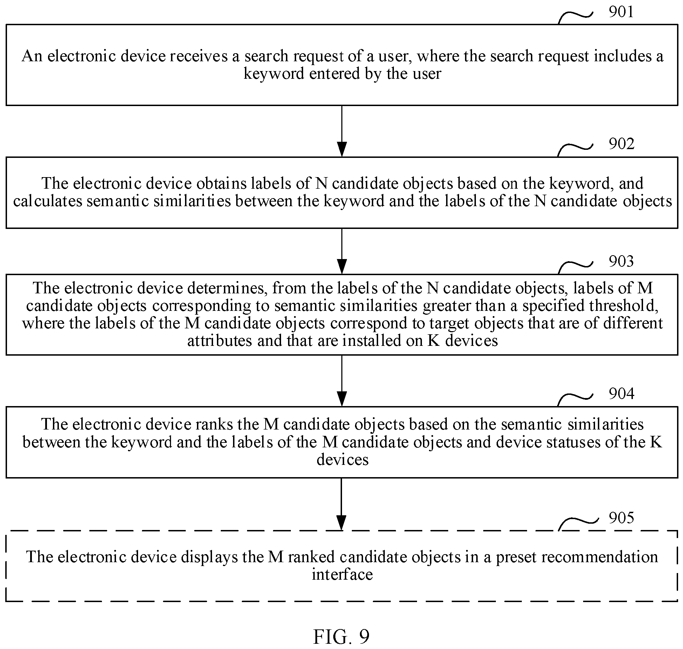

With reference to the example shown in the scenario 2, in summary, an embodiment of this application further provides an information ranking method. Specifically, as shown in FIG. 9, the method includes the following steps.

Step 901: An electronic device receives a search request of a user, where the search request includes a keyword entered by the user.

For example, the search request may be content entered by the user by touching, or content entered by using a voice instruction. When the user enters content, the electronic device may perform broad keyword matching by using information entered by the user. After the user completes keyword input, the electronic device may perform exact keyword matching based on the keyword entered by the user.

Step 902: The electronic device obtains labels of N candidate objects based on the keyword, and calculates semantic similarities between the keyword and the labels of the N candidate objects.

For details, refer to step 702. Details are not described herein again.

Step 903: The electronic device determines, from the labels of the N candidate objects, labels of M candidate objects corresponding to semantic similarities greater than a specified threshold. Labels of K candidate objects in the labels of the M candidate objects correspond to target objects that are of different attributes and that are installed on K devices, M≤N, and M, N, and K are positive integers greater than or equal to 2.

Specifically, the target objects of different attributes may be target objects with different names, for example, a WeChat^{®} application and an Alipay^{®} application. Alternatively, the target objects of different attributes may be target objects of different vendors. For example, a TikTok^{®} application and a Kuaishou^{®} application are applications of different vendors. Alternatively, the target objects of different attributes may be target objects with different installation packages. For example, an installation package name of the WeChat^{®} application is different from an installation package name of the Alipay^{®} application. Alternatively, the target objects of different attributes may be target objects with different functions. For example, the TikTok^{®} application and the WeChat^{®} application have different functions.

Step 904: The electronic device ranks the M candidate objects based on the semantic similarities between the keyword and the labels of the M candidate objects and device statuses of the M devices.

In a possible embodiment, the electronic device may determine first weights and second weights respectively corresponding to the M candidate objects, and rank the M candidate objects based on the first weights and the second weights.

Specifically, the electronic device determines that a larger one of the semantic similarities between the keyword and the labels of the M candidate objects indicates a larger first weight; and on the contrary, a smaller semantic similarity indicates a smaller first weight.

In addition, the electronic device determines, based on a matching degree between a priori knowledge constraint condition related to the M candidate objects and the device statuses of the K devices, second weights respectively corresponding to the M candidate objects.

The priori knowledge constraint condition related to the M candidate objects includes at least one of the following conditions: the candidate objects preferentially run on a large-screen device, the candidate objects preferentially run on a device of a power-plugged type, the candidate objects preferentially run on a device with a strong computing capability, the candidate objects preferentially run on a device with good audio playing performance. For example, it is assumed that the candidate object is the "Baidu Map" service in the scenario 2. The "Baidu Map" service is navigation software. Therefore, a priori knowledge constraint condition related to the "Baidu Map" service includes preferentially running on an in-vehicular device, and a matching degree between the "Baidu Map" service and a device status of the in-vehicular device is the highest.

In a possible embodiment, a manner in which the electronic device determines the second weights respectively corresponding to the M candidate objects may be any one or a combination of the following manners.

Manner 1: For any one of the M candidate objects, when the priori knowledge constraint condition related to the candidate objects is preferentially running on a device of a power-plugged type, the electronic device determines a second weight based on whether a device on which the candidate object is located is a device that supports the power-plugged type. A second weight when the device on which the candidate object is located is a device that supports the power-plugged type is higher than a second weight when the device on which the candidate object is located is a device that supports a battery type.

For example, if search results of the mobile phone in the scenario 2 include the "Baidu Map" service of the in-vehicle terminal, the "Baidu Map" on the in-vehicle terminal is ranked higher in a column of "all devices", and the "Baidu Map" service on the mobile phone is ranked lower. Because the in-vehicle terminal is a power-plugged device that can support high power consumption, there is basically no problem of insufficient power.

Manner 2: For any one of the M candidate objects, when the priori knowledge constraint condition related to the candidate objects is that the candidate object preferentially runs on a large-screen device, the electronic device determines a second weight based on a screen size of a device on which the candidate object is located. A second weight when the device on which the candidate object is located is a large-screen device is higher than a second weight when the device on which the candidate object is located is a small-screen device.

Manner 3: For any one of the M candidate objects, when the priori knowledge constraint condition related to the candidate objects is that the candidate object preferentially runs on a device with a strong computing capability, the electronic device determines a second weight based on whether a device on which the candidate object is located has sufficient computing resources. A second weight when the device on which the candidate object is located has sufficient computing resources is higher than a second weight when the device on which the candidate object is located does not have sufficient computing resources.

Manner 4: For any one of the M candidate objects, when the priori knowledge constraint condition related to the candidate objects is that the candidate object preferentially runs on a device with good audio playing performance, the electronic device determines a second weight based on audio playing performance of a device on which the candidate object is located. A second weight when the device on which the candidate object is located has good audio playing performance is higher than a second weight when the device on which the candidate object is located has poor audio playing performance.

Optionally, after the M candidate objects are ranked, this embodiment of this application may further include step 905: The electronic device displays the M ranked candidate objects in a preset recommendation interface.

In another possible case, the electronic device may further obtain labels of the devices from a database or a server, and then calculate similarities between the keyword and the labels of the devices, to determine, based on the similarities, third weights of the K candidate objects corresponding to the K devices. Further, the electronic device may rank the K candidate objects based on the first weights, the second weights, and the third weights. For example, a label of the smart screen in the living room includes video, conference, and the like, and a label of the mobile phone includes call, Internet access, and the like. The mobile phone may obtain the labels of the devices from a cloud server. The label may be content preset by a developer, or may be actively marked by a user and then uploaded to the cloud server. This is not limited in this application.

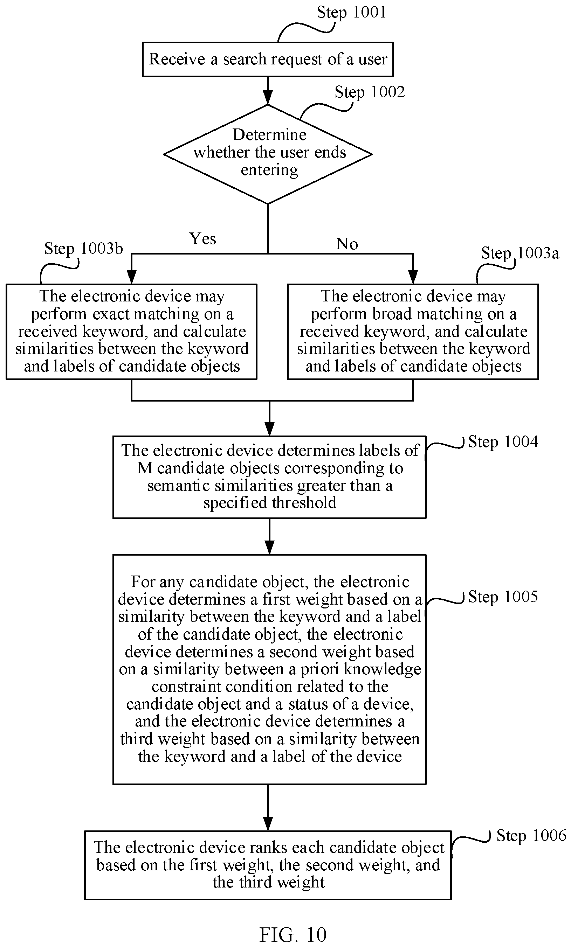

Specifically, an embodiment of this application provides a method flowchart shown in FIG. 10. The method includes the following steps.

Step 1001: An electronic device receives a search request of a user, where the search request includes a keyword entered by the user.

For details, refer to step 701.

Step 1002: When the electronic device receives an entered word, the electronic device may determine, in real time, whether the user ends entering; and if the user has not ended the entering, perform step 1003a; otherwise, perform step 1003b.

For example, when the user enters "navigation", the mobile phone determines, when each character is received, whether the entering is ended.

Step 1003a: If the entering is not ended, the electronic device may perform broad matching on a received keyword, and calculate similarities between the keyword and labels of candidate objects.

For example, the electronic device performs broad matching on a received keyword "navi", calculates a similarity between the keyword "navi" and a label of an application, and calculates a similarity between the keyword "navi" and a label of a device.

Step 1003b: If the entering is ended, the electronic device may perform exact matching on a received keyword, calculate similarities between the keyword and labels of candidate objects, and calculate similarities between a priori knowledge constraint condition related to the candidate objects and statuses of devices.

For example, the electronic device performs exact matching on the received keyword "navigation", calculates a similarity between the keyword "navigation" and a label of an application, and calculates a similarity between the keyword "navigation" and a label of a device.

Step 1004: The electronic device determines labels of M candidate objects corresponding to semantic similarities greater than a specified threshold.

Step 1005: For any one of the M candidate objects, the electronic device determines a first weight based on a similarity between the keyword and a label of the candidate object, the electronic device determines a second weight based on a similarity between the priori knowledge constraint condition related to the candidate object and a status of a device, and the electronic device determines a third weight based on a similarity between the keyword and a label of the device.

Step 1006: The electronic device ranks each candidate object based on the first weight, the second weight, and the third weight.

In this embodiment, search results obtained after such ranking has the following features: An application or a service whose label is closer to the keyword in semantics is ranked higher. A search result of a device whose label is closer to the keyword in semantics is ranked higher. A search result of a device whose status better matches a priori knowledge constraint condition related to candidate objects is ranked higher.

In conclusion, in this embodiment of this application, applications or services may be accurately ranked comprehensively based on correlations between device statuses, a priori knowledge constraint condition related to the applications or the services, and a meaning of content entered by a user. When search results include application labels or service labels that are on different devices and that correspond to a same target object, applications or services that are on the different devices and that correspond to the same target object may be accurately ranked by matching between device statuses and a priori knowledge constraint condition related to the target object. A result of such ranking can more accurately match an application or a service that the user wants to search for. This helps improve search efficiency, and improve user experience.

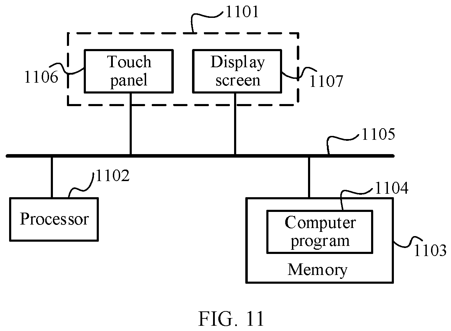

In some other embodiments of this application, an embodiment of this application discloses an electronic device. As shown in FIG. 11, the electronic device may include a touchscreen 1101, where the touchscreen 1101 includes a touch panel 1106 and a display screen 1107; one or more processors 1102; a memory 1103; one or more applications (not shown); and one or more computer programs 1104. The components may be connected by using one or more communications buses 1105. The one or more computer programs 1104 are stored in the memory 1103 and are configured to be executed by the one or more processors 1102. The one or more computer programs 1104 include instructions, and the instructions may be used to perform steps in a corresponding embodiment of FIG. 7, FIG. 8, FIG. 9, or FIG. 10.

An embodiment of this application further provides a computer-readable storage medium. The computer-readable storage medium stores computer instructions. When the computer instructions are run on an electronic device, the electronic device is enabled to perform the foregoing related method steps to implement the information ranking method in the foregoing embodiment.

An embodiment of this application further provides a computer program product. When the computer program product runs on a computer, the computer is enabled to perform the foregoing related steps to implement the information ranking method in the foregoing embodiment.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the information ranking method in the foregoing method embodiments.

The electronic device, the computer storage medium, the computer program product, or the chip provided in embodiments of this application may be all configured to perform the corresponding method provided above. Therefore, for beneficial effects that can be achieved by them, refer to the beneficial effects of the corresponding method provided above. Details are not described herein again.

Based on descriptions about the foregoing implementations, a person skilled in the art may understand that, for a purpose of convenient and brief description, division of the foregoing functional modules is merely used as an example for description. In actual application, the foregoing functions may be allocated to and completed by different functional modules as required. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division of modules or units is merely logical function division and may be other division during actual implementation. For example, a plurality of units or components may be combined or integrated into another apparatus, or some features may be discarded or not performed. In addition, the displayed or discussed mutual couplings or direct couplings or communications connections may be implemented by using some interfaces. The indirect couplings or communication connections between the apparatuses or units may be implemented in electrical, mechanical, or other forms.

The units described as separate components may or may not be physically separate, and components displayed as units may be one or more physical units, may be located in one place, or may be distributed in different places. Some or all of the units may be selected depending on actual requirements to achieve the objectives of the solutions in embodiments.

In addition, functional units in embodiments of this application may be integrated into one processing unit, each of the units may exist independently physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, technical solutions of embodiments of this application essentially, or a part contributing to a conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. An information ranking method, comprising:
receiving a search request of a user, wherein the search request comprises a keyword entered by the user; and
displaying a recommendation interface in response to the search operation, wherein labels of K candidate objects in candidate objects in the recommendation interface correspond to target objects of a same attribute that are installed on K devices, the candidate objects are candidate applications and/or candidate services, and K is a positive integer greater than or equal to 2, wherein
ranking of the K candidate objects is determined based on semantic similarities between the keyword and the labels of the K candidate objects and device statuses of the K devices.

2. The method according to claim 1, wherein before the displaying a recommendation interface, the method further comprises:
obtaining labels of N candidate objects based on the keyword, and calculating semantic similarities between the keyword and the labels of the N candidate objects;
determining, from the labels of the N candidate objects, labels of M candidate objects corresponding to semantic similarities greater than a specified threshold, wherein the labels of the K candidate objects in the labels of the M candidate objects correspond to the target objects of the same attribute that are installed on the K devices, M≤N, and M and N are positive integers greater than or equal to 2; and
ranking the K candidate objects based on the semantic similarities between the keyword and the labels of the K candidate objects and the device statuses of the K devices.

3. The method according to claim 1 or 2, wherein the device statuses of the K devices comprise at least one of the following states:
a power supply type of the device, a screen size of the device, an available computing resource of the device, and a correlation between device performance and the target object.

4. The method according to any one of claims 1 to 3, wherein the target objects of the same attribute on the K devices are target objects with a same name on the K devices; or the target objects of the same attribute on the K devices are target objects from a same vendor; or the target objects of the same attribute on the K devices are target objects with a same installation package on the K devices; or the target objects of the same attribute on the K devices are target objects with a same function on the K devices.

5. The method according to any one of claims 2 to 4, wherein the ranking the K candidate objects based on the semantic similarities between the keyword and the labels of the K candidate objects and the device statuses of the K devices comprises:
determining, based on the semantic similarities between the keyword and the labels of the K candidate objects, first weights respectively corresponding to the K candidate objects;
determining, based on matching degrees between a priori knowledge constraint condition related to the target object and the device statuses of the K devices, second weights respectively corresponding to the K candidate objects; and
ranking the K candidate objects based on the first weights and the second weights, wherein a candidate object with a larger product of the first weight and the second weight is ranked higher.

6. The method according to claim 5, wherein the priori knowledge constraint condition related to the target object comprises at least one of the following conditions:
the target object preferentially runs on a large-screen device, the target object preferentially runs on a device of a power-plugged type, the target object preferentially runs on a device with a strong computing capability, and the target object preferentially runs on a device with good audio playing performance.

7. The method according to claim 5, wherein the determining, based on matching degrees between a priori knowledge constraint condition related to the target object and the device statuses of the K devices, second weights respectively corresponding to the K candidate objects comprises:
when the priori knowledge constraint condition related to the target object is that the target object preferentially runs on a device of a power-plugged type, determining that a second weight of a corresponding candidate object on a device that supports the power-plugged type is greater than a second weight of a corresponding candidate object on a device that does not support the power-plugged type in the K devices corresponding to the K candidate objects; or
when the priori knowledge constraint condition related to the target object is that the target object preferentially runs on a large-screen device, determining that a corresponding candidate object on a device with a larger screen has a larger second weight in the K devices corresponding to the K candidate objects; or
when the priori knowledge constraint condition related to the target object is that the target object preferentially runs on a device with a strong computing capability, determining that a corresponding candidate object on a device having a stronger computing capability has a larger second weight in the K devices corresponding to the K candidate objects; or
when the priori knowledge constraint condition related to the target object is that the target object preferentially runs on a device with good audio playing performance, determining that a device with better audio playing performance has a larger second weight in the K devices corresponding to the K candidate objects.

8. The method according to any one of claims 1 to 7, wherein the obtaining labels of N candidate objects based on the keyword comprises:
obtaining, from a database, detailed information about L candidate objects on the K devices;
extracting original keywords from the detailed information about the L candidate objects, performing semantic parsing on the original keywords, and obtaining labels of the L candidate objects from a parsing result; and
obtaining the labels of the N candidate objects from the labels of the L candidate objects based on matching degrees between the keyword and the labels of the L candidate objects.

9. An electronic device, wherein the electronic device comprises a processor and a memory;
the memory stores program instructions; and
the processor is configured to run the program instructions stored in the memory, to enable the electronic device to perform the following operations:
receiving a search request of a user, wherein the search request comprises a keyword entered by the user; and
displaying a recommendation interface in response to the search operation, wherein labels of K candidate objects in candidate objects in the recommendation interface correspond to target objects of a same attribute that are installed on K devices, the candidate objects are candidate applications and/or candidate services, and K is a positive integer greater than or equal to 2, wherein
ranking of the K candidate objects is determined based on semantic similarities between the keyword and the labels of the K candidate objects and device statuses of the K devices.

10. The electronic device according to claim 9, wherein before displaying the recommendation interface, the electronic device further comprises:
obtaining labels of N candidate objects based on the keyword, and calculating semantic similarities between the keyword and the labels of the N candidate objects;
determining, from the labels of the N candidate objects, labels of M candidate objects corresponding to semantic similarities greater than a specified threshold, wherein the labels of the K candidate objects in the labels of the M candidate objects correspond to the target objects of the same attribute that are installed on the K devices, M≤N, and M and N are positive integers greater than or equal to 2; and
ranking the K candidate objects based on the semantic similarities between the keyword and the labels of the K candidate objects and the device statuses of the K devices.

11. The electronic device according to claim 9 or 10, wherein the device statuses of the K devices comprise at least one of the following states:
a power supply type of the device, a screen size of the device, an available computing resource of the device, and a correlation between device performance and the target object.

12. The electronic device according to any one of claims 9 to 11, wherein the target objects of the same attribute on the K devices are target objects with a same name on the K devices; or the target objects of the same attribute on the K devices are target objects from a same vendor; or the target objects of the same attribute on the K devices are target objects with a same installation package on the K devices; or the target objects of the same attribute on the K devices are target objects with a same function on the K devices.

13. The electronic device according to any one of claims 10 to 12, wherein the processor is configured to run the program instructions stored in the memory, to enable the electronic device to specifically perform the following operations:
determining, based on the semantic similarities between the keyword and the labels of the K candidate objects, first weights respectively corresponding to the K candidate objects;
determining, based on matching degrees between a priori knowledge constraint condition related to the target object and the device statuses of the K devices, second weights respectively corresponding to the K candidate objects; and
ranking the K candidate objects based on the first weights and the second weights, wherein a candidate object with a larger product of the first weight and the second weight is ranked higher.

14. The electronic device according to claim 13, wherein the priori knowledge constraint condition related to the target object comprises at least one of the following conditions:
the target object preferentially runs on a large-screen device, the target object preferentially runs on a device of a power-plugged type, the target object preferentially runs on a device with a strong computing capability, and the target object preferentially runs on a device with good audio playing performance.

15. The electronic device according to claim 13, wherein the processor is configured to run the program instructions stored in the memory, to enable the electronic device to specifically perform the following operation when determining the second weights respectively corresponding to the K candidate objects:
when the priori knowledge constraint condition related to the target object is that the target object preferentially runs on a device of a power-plugged type, determining that a second weight of a corresponding candidate object on a device that supports the power-plugged type is greater than a second weight of a corresponding candidate object on a device that does not support the power-plugged type in the K devices corresponding to the K candidate objects; or
when the priori knowledge constraint condition related to the target object is that the target object preferentially runs on a large-screen device, determining that a corresponding candidate object on a device with a larger screen has a larger second weight in the K devices corresponding to the K candidate objects; or
when the priori knowledge constraint condition related to the target object is that the target object preferentially runs on a device with a strong computing capability, determining that a corresponding candidate object on a device having a stronger computing capability has a larger second weight in the K devices corresponding to the K candidate objects; or
when the priori knowledge constraint condition related to the target object is that the target object preferentially runs on a device with good audio playing performance, determining that a device with better audio playing performance has a larger second weight in the K devices corresponding to the K candidate objects.

16. The electronic device according to any one of claims 9 to 15, wherein the processor is configured to run the program instructions stored in the memory, to enable the electronic device to specifically perform the following operations:
obtaining, from a database, detailed information about L candidate objects on the K devices;
extracting original keywords from the detailed information about the L candidate objects, performing semantic parsing on the original keywords, and obtaining labels of the L candidate objects from a parsing result; and
obtaining the labels of the N candidate objects from the labels of the L candidate objects based on matching degrees between the keyword and the labels of the L candidate objects.

17. A computer-readable storage medium, wherein the computer-readable storage medium comprises program instructions, and when the program instructions are run on an electronic device, the electronic device is enabled to perform the method according to any one of claims 1 to 8.
